(19)

(11) **EP 4 216 009 A1**

(12) **EUROPEAN PATENT APPLICATION**
published in accordance with Art. 153(4) EPC


(43) Date of publication:
**26.07.2023 Bulletin 2023/30**

(21) Application number: **21869468.5**

(22) Date of filing: **17.09.2021**

(51) International Patent Classification (IPC):
***G05B 19/418*** *(2006.01)* ***G06Q 50/04*** *(2012.01)*
***B63B 73/00*** *(2020.01)* ***G06F 30/15*** *(2020.01)*
***G06F 30/20*** *(2020.01)*

(52) Cooperative Patent Classification (CPC):
**B63B 73/00; G05B 19/418; G06F 30/15; G06F 30/20; G06Q 50/04;** Y02P 90/02; Y02P 90/30

(86) International application number:
**PCT/JP2021/034408**

(87) International publication number:
**WO 2022/059786 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 JP 2020157944**
**22.10.2020 JP 2020177515**



(71) Applicant: **National Institute of Maritime, Port and Aviation Technology**
**Mitaka-shi, Tokyo 181-0004 (JP)**

(72) Inventors:
- **TANIGUCHI, Tomoyuki**
  **Mitaka-shi, Tokyo 181-0004 (JP)**
- **TAKEZAWA, Masahito**
  **Mitaka-shi, Tokyo 181-0004 (JP)**
- **MATSUO, Kohei**
  **Mitaka-shi, Tokyo 181-0004 (JP)**
- **HIRAKATA, Masaru**
  **Mitaka-shi, Tokyo 181-0004 (JP)**

(74) Representative: **Körfer, Thomas**
**Mitscherlich PartmbB**
**Patent- und Rechtsanwälte**
**Sonnenstrasse 33**
**80331 München (DE)**


(54) **SHIPBUILDING SIMULATION METHOD, SIMULATION PROGRAM, AND SIMULATION SYSTEM**


(57) The present invention is to simulate building of a ship at a detailed operation level by executing: a product model creating step S1 of creating a product model by obtaining basic design information 1 in which a coupling relation between a completed part and a component part of the ship is clarified; a facility model creating step S2 of obtaining equipment information 21 and worker information 22 of a factory and creating a facility model; a process model creating step S3 of clarifying assembling procedure and tasks to build the completed part and creating a process model based on the product model and the facility model; a simulation step S4 to carry out time evolution system simulation based on the process model; and a time series informatization step S5 of time series digitizing a result of the time evolution system simulation into building time series information 42.

Fig. 1

P60702/WOEP
EP 21 869 468.5
Translation of PCT/JP2021/034408

CAD system
Basic design information
1
S1
Create product model
S2
Create facility model
Change limitation
S3
Create process model
Factory layout information
3
Schedule information
2
-Assembling tree
-Task tree
(Compose using custom task)
Custom task
5
Basic task
6
Rule information
4
S4
Time evolution system simulation
Virtual equipment
Virtual worker
S5
Time series informatization
S6
Output
S7
Determine
S3-6
Process data of past ship
S4-5
Interim result supply
User

## Description

[TECHNICAL FEILD]

The present invention relates to a method, a program and a system for simulating building of a designed ship.

[BACKGROUNG TECHNIQUE]

An operation amount of each of operations, i.e., man-hour which become a setting basis of a production (building) schedule or planning calendar of a shipbuilding is generally acquired based on point of view of "man-hour = standard time per controlling quantity of material × controlling quantity of material".

However, essentially, only a main operation (operation by which a product proceeds toward termination) is proportionate to controlling quantity of material. An associated operation (main operation cannot proceed if the associated operation is not carried out, but a product is not completed if only the associated operation is carried out) and non-added valuable conduct (conduct which is non variable for termination of a product) are simply handled as totally being proportionate to the controlling quantity of material although the associated operation and the non-added valuable conduct are determined in dimension which is different from the controlling quantity of material. It is reported that a rate of the main operation in the shipbuilding is generally 30 to 40% although it differs depending upon a type of occupation, there is a problem in terms of precision to proportionally estimate the man-hour from the controlling quantity of material.

On the other hand, a line simulator which carries out simulation of a producing step exists, bit it is necessary to manually input all of detailed operations one by one. The line simulator is suited for simulation in which flow of material and motion of an operator are determined like line production of a large number of products and the similar operation is repeated, but the line simulator is not suited for simulation in which various operations are changed in depending on the situation like shipbuilding which is built to order.

Here, patent document 1 discloses a ship and a marine plant production simulation consolidated solution system including a ship and a marine plant production simulation framework which are commonly applied regardless of different environments of shipyards, a cross-validation simulation system of shipbuilding marine step which is discriminately applied in conformance to the different environments of the shipyards, a crane lifting and on-board simulation system of a block, GIS information infrastructure equipment, and extendability and recyclability which are effectively applied in conformance to situations of the shipyards by separably coupling the block and a material flow traffic simulation system to each other.

Patent document 2 discloses a method for generating a project plan, a project description information including information describing precedence relationships between the tasks, information indicating durations of the tasks, and information indicating variability in the durations of the tasks is received by a processor unit, a simulation model is generated for the project by the processor unit using the project description information, the simulation model is run for a plurality of runs to identify a subset of tasks forming a critical path and to generate simulation results data, and a project network presentation including the identified subset of the tasks forming the critical path is generated from the simulation results data, and the project description information is received by the processor unit in an information format which is selected from a group of information format including a text file, an electronic spreadsheet file and an Extensible Markup Language file.

Patent document 3 discloses a scheduling device for carrying out production scheduling of production object including a plurality of steps. The scheduling device includes accumulating means in which step connecting information for setting a connecting ranking relation of the steps, block flow information for setting a moving path of blocks included in the steps, operation construction period information for setting construction period of each of the steps of the blocks, and constraint conditions of the steps are accumulated, interpretation means for sorting steps from information accumulated in the accumulating means in the order from downstream to upstream, model creating means for forming a scheduling model based on step data after sorting obtained by the interpretation means, plan calendar creating means for optimizing schedule per scheduling model obtained by the model creating means, and output means for outputting a scheduling result obtained by the plan calendar creating means.

Patent document 4 discloses a production system plan method. In the production system plan method, production action is simulated by a production line model formed in each of the plans using a step plan, an equipment installing plan based on the step plan, a worker plan based on the step plan and the equipment installing plan, and a production plan based on the step plan, the equipment installing plan and the worker plan, and an evaluation norm value of each of the plans is formed, it is determined whether each of the plans is good or poor by the norm value, and the plans are corrected based thereon.

In non-patent document 1, as specific action corresponding to step management for constructing shipbuilding CIM, process planning and scheduling are mentions. In the process planning, it is described that method and procedure for production based on conceptional knowledge concerning a producing field concerning production information are determined. In the scheduling, it is described a result of the process planning is developed in view of utilization of time and a field machine based on knowledge concerning specific status in an actual producing field, a planning calendar for satisfying delivery period and other conditions is formed. And non-patent document 1 disclose Shipyard Model for steps management based on object orientation.

Non-patent document 2 discloses a technique to evaluate influence on period and cost of entire process caused by introducing new production equipment utilizing production process simulation in which reworking operation is taken into account based on a production error of a product for production process to evaluate introduction effect of production equipment in a ship production process. It is described that in the production process simulation, constraint of an operation place of shipbuilding shipyard and skill of a worker are taken into account.

[PRIOR ART DOCUMENTS]

[PATENT DOCUMENTS]

[Patent Document 1] Japanese Utility Model Registration No.3211204
[Patent Document 2] Japanese Patent Application Laid-open No.2013-117959
[Patent Document 3] Japanese Patent Application Laid-open No.2007-183817
[Patent Document 4] Japanese Patent Application Laid-open No.2003-162313

[NON-PATENT DOCUMENTS]

[Non-patent Document 1] "A Fundamental Study on Manufacturing Planning and Control System for Shipbuilding CIM" by TAKEO Koyama and one other, Journal of the Society of Naval Architects of Japan, The Society of Naval Architects of Japan, November in 1989, volume 166, pages 415 to 423
[Non-patent Document 2] "Study on Installation of Production Facilities Using Shipbuilding Process Simulation" by MITSUYUKI Taiga and three others, Journal of the Japan Society of Naval Architects and Ocean Engineers, The Japan Society of Naval Architects and Ocean Engineers, December in 2016, Volume 24, pages 291 to 298

[SUMMARY OF THE INVENTION]

[OBJECT TO BE SOLVED BY THE INVENTION]

Patent documents 1 to 4 and non-patent documents 1 to 2 do not precisely replicate production action of a worker in simulation of building, including main operations and associated operations. It is an object of the present invention to provide a shipbuilding simulation method, a simulation program, and a simulation system capable of simulating building of a ship at a detailed operation level.

[MEANS FOR SOLVING PROBLEM]

A shipbuilding simulation method corresponding to claim 1, is the method for simulating building of a designed ship, executes: a product model creating step of creating a product model by obtaining basic design information in which a coupling relation between a completed part of the ship and a component part composing the completed part is clarified; a facility model creating step of obtaining equipment information of a factory which builds the completed part and worker information, and creating a facility model concerning equipment and a worker concerning building of the completed part; a process model creating step of clarifying assembling procedure and tasks to assemble the component part to build the completed part and creating a process model based on the product model and the facility model; a simulating step to carry out time evolution system simulation which sequentially calculates a progress status of building hourly based on the process model; and time series informatization step of time series digitizing a result of the time evolution system simulation into building time series information.

According to the invention described in claim 1, a user can simulate building of a ship at a detailed operation level, it is possible to improve a factory, improve production design, forecast cost when order is received, and consider investment of equipment, based on building time series information as a result of the precise simulation. Therefore, it is possible to reduce building cost, and shorten a building period.

In an invention described in claim 2, the process model includes an assembling tree expressing dependence relation for assembling the component part as the completed part, the tasks required for assembling operation, and a task tree expressing dependence relation between the tasks.

According to the invention described in claim 2, it is possible to clarify assembling procedure and a task concerning the assembling procedure, and it is possible to precisely create a process model.

In an invention described in claim 3, the tasks include a custom task constructed by combining basic tasks which are functions that can be executed by the time evolution system simulation.

According to the invention described in claim 3, it is possible to enhance the precision of simulation by the custom task in which small operations are combined by type of operations.

In an invention described in claim 4, in the process model creating step, at least one of schedule information of the worker or factory layout information concerning location of the equipment and the worker is created based on the assembling procedure and the tasks.

According to the invention described in claim 4, it is possible to precisely replicate and simulate all of production actions of workers including a main operation and an associated operation based on the schedule information. Further, it is possible to carry out the simulation based on the factory layout information on which the locations of the equipment and the workers are reflected.

In an invention described in claim 5, in the process model creating step, the assembling procedure including an intermediate part of the component part is defined as the assembling tree, the appropriate task in each of stages of the assembling procedure is defined, anteroposterior relation as the dependence relation of the tasks is defined as the task tree, it is defined whether or not the task is in an ability value range based on the facility model, and when the task is in the ability value range, the schedule information is created.

According to the invention described in claim 5, it is possible to prevent simulation exceeding ability values of the facility and the task from being carried out and the schedule information from being created.

In an invention described in claim 6, when the task exceeds the ability value range, the definition of the intermediate part, the definition of the assembling tree, the definition of the task and the definition of the task tree are redefined.

According to the invention described in claim 6, it is possible to create a more precise process model by redefining each of definitions.

In an invention described in claim 7, when the process model is created, process data of a past ship which is built in the past is referred to, and the process data is diverted.

According to the invention described in claim 7, when a product model or a facility model is changed based on basic design information, it is possible to create a process model swiftly and precisely with effort smaller than that required for creating a process model from the beginning.

In an invention described in claim 8, the time evolution system simulation in the simulating step sequentially calculates an hourly position of the completed part or the component part, positions and occupation statuses of the equipment and the worker, and the assembling procedure and the progress status of the task.

According to the invention described in claim 8, it is possible to precisely carry out the time evolution system simulation.

In an invention described in claim 9, in the simulating step, when the worker autonomously proceeds a virtual operation utilizing previously obtained rule information and the task, Brain which is determination rule given to the worker is utilized as the rule information.

According to the invention described in claim 9, it becomes easy for a worker in the simulation to proceed a virtual operation reliably by utilizing rule information and a task. Further, the worker can determine operations which are not repetitive operations but which require on factory floor extremely many determinations utilizing the Brains, and can smoothly proceed virtual operations.

In an invention described in claim 10, the method further includes a determining step for determining whether a result of the building time series information exceeds a predetermined time range, wherein the facility model is changed in a corresponding range, and the method repeatedly executes the process model creating step, the simulating step and the time series informatization step.

According to the invention described in claim 10, it is possible to obtain a simulation result in which building of a ship can be completed within predetermined time.

A shipbuilding simulation program corresponding to claim 11, is the program for simulating building of a designed ship, the simulation program makes a computer executes: the product model obtaining step of obtaining a product model created in the shipbuilding simulation method; the facility model obtaining step of obtaining a created facility model; the process model creating step; the simulating step; and the time series informatization step, and wherein an outputting step outputting the building time series information is executed.

According to the invention described in claim 11, it is possible to simulate building of a ship at a detailed operation level, and a user can improve a factory, improve production design, forecast cost when order is received, and consider investment of equipment, based on building time series information which is output as the precise simulation result. Therefore, it is possible to reduce building cost, and shorten a building period.

In an invention described in claim 12, the simulation program further causes the computer to the determining step in the shipbuilding simulation method.

According to the invention described in claim 12, it is possible to obtain a simulation result in which building of a ship can be completed within predetermined time.

In an invention described in claim 13, the simulation program causes the computer to display an image of at least one of a calculation result and interim passage in the process model creating step, the simulating step and the outputting step.

According to the invention described in claim 13, it becomes easy for a user to understand a simulation result through what type of process, and visually check and understand interim process of simulation.

A shipbuilding simulation system corresponding to claim 14, is the system for executing the shipbuilding simulation method, includes: product model obtaining means of obtaining the product model; facility model obtaining means of obtaining the facility model concerning the equipment and the worker related to building of the ship; process model creating means of creating the process model in which the assembling procedure and the task for building the ship are clarified; building simulating means of carrying out time evolution system simulation based on the process model; and information supplying means of supplying a result of the time evolution system simulation as building time series information.

According to the invention described in claim 14, a user can simulate building of a ship at a detailed operation level, it is possible to improve a factory, improve production design, forecast cost when order is received, and consider investment of equipment, based on building time series information as a result of the precise simulation. Therefore, it is possible to reduce building cost, and shorten a building period.

In an invention described in claim 15, the system further includes model changing instructing means, wherein it is determined whether or not a result of the building time series information exceeds an expected target range, and if the result of the building time series information exceeds the expected target range, the model changing instructing means instructs to change at least one of the facility models and the process model within a corresponding range.

According to the invention described in claim 15, it is possible to obtain a simulation result in which building of a ship is completed within a range of an expected target.

In an invention described in claim 16, the facility model obtaining means obtains the equipment information and the worker information of the plurality of factories, the process model creating means creates the process model of each of the factories, the building simulating means carries out the time evolution system simulation for each of the factories for the product model, and a result of the time evolution system simulation of each of the factories is supplied from the information supplying means in a comparable state.

According to the invention described in claim 16, a process model for each a factory is created from one product model, and simulation is carried out using a facility model of each factory. Therefore, it is possible to forecast cost at the time of reception of order when a plurality of factories build a ship in cooperation, and to consider investment of equipment, and it is possible to further reduce building cost, and to further shorten a building period. Further, a user can swiftly and reliably compare a production cost and a building period between factories.

In an invention described in claim 17, the facility model obtaining means obtains at least one of the equipment information and the worker information as improvement information of the factory, the building simulating means carries out the time evolution system simulation based on the improvement information of the factory, and the information supplying means supplies the building time series information based on the improvement information.

According to the invention described in claim 17, it is possible to simulate when equipment and a worker of a factory are changed and improved by obtaining and using improvement information of the factory.

In an invention described in claim 18, the system further includes based on the building time series information, at least one of cost-calculating means of calculating cost concerning building of the ship, part-procuring planning means of creating a purchase plan of a purchased part which is required for building of the ship, and production planning system-cooperating means of coordinating with a production planning system which gestates a production plan related to building of the ship.

According to the invention described in claim 18, it is possible to easily obtain cost concerning building of a ship calculated based on building time series information. Further, it is possible to easily obtain a purchase plan of a purchased part created based on the building time series information. Further, the building time series information can smoothly be connected to gestation of a production plan of entire building of a ship.

[EFFECT OF THE INVENTION]

According to the shipbuilding simulation method of the present invention, a user can simulate building of a ship at a detailed operation level, it is possible to improve a factory, improve production design, forecast cost when order is received, and consider investment of equipment, based on building time series information as a result of the precise simulation. Therefore, it is possible to reduce building cost and shorten a building period.

When the process model includes an assembling tree expressing dependence relation for assembling the component part as the completed part, the tasks required for assembling operation, and a task tree expressing dependence relation between the tasks, it is possible to clarify assembling procedure and a task concerning the assembling procedure, and it is possible to precisely create a process model.

When the tasks include a custom task constructed by combining basic tasks which are functions that can be executed by the time evolution system simulation, it is possible to enhance the precision of simulation by the custom task in which small operations are combined by type of operations.

In the process model creating step, when at least one of schedule information of the worker or factory layout information concerning location of the equipment and the worker is created based on the assembling procedure and a tasks, it is possible to precisely replicate and simulate all of production actions of workers including a main operation and an associated operation based on the schedule information. Further, it is possible to carry out the simulation based on the factory layout information on which the locations of the equipment and the workers are reflected.

In the process model creating step, when the assembling procedure including an intermediate part of the component part is defined as the assembling tree, the appropriate task in each of stages of the assembling procedure is defined, anteroposterior relation as the dependence relation of the tasks is defined as the task tree, it is defined whether or not the task is in an ability value range based on the facility mode, and when the task is in the ability value range, the schedule information is created, it is possible to prevent simulation exceeding ability values of the facility and the task from being carried out and the schedule information from being created.

When the task exceeds the ability value range, the definition of the intermediate part, the definition of the assembling tree, the definition of the task and the definition of the task tree are redefined, it is possible to create a more precise process model by redefining each of definitions.

When the process model is created, process data of a past ship which is built in the past is referred to, and the process data is diverted, it is possible to create a process model swiftly and precisely with effort smaller than that required for creating a process model from the beginning when a product model or a facility model is changed based on basic design information.

When the time evolution system simulation in the simulating step sequentially calculates an hourly position of the completed part or the component part, positions and occupation statuses of the equipment and the worker, and the assembling procedure and the progress status of the task, it is possible to precisely carry out the time evolution system simulation.

In the simulating step, when the worker autonomously proceeds an virtual operation utilizing previously obtained rule information and the task, Brains which is determination rule given to the worker is utilized as the rule information, it becomes easy for a worker in the simulation to proceed a virtual operation reliably by utilizing rule information and a task. Further, the worker can determine operations which are not repetitive operations but which require on factory floor extremely many determinations utilizing the Brains, and can smoothly proceed virtual operations.

When the method further includes a determining step for determining whether a result of the building time series information exceeds a predetermined time range, and the facility model is changed in a corresponding range and the method repeatedly executes the process model creating step, the simulating step and the time series information step, it is possible to obtain a simulation result in which building of a ship can be completed within predetermined time.

According to the shipbuilding simulation program of the present invention, it is possible to simulate building of a ship at a detailed operation level, and a user can improve a factory, improve production design, forecast cost when order is received, and consider investment of equipment, based on building time series information which is output as the precise simulation result. Therefore, it is possible to reduce building cost, and shorten a building period.

When the simulation program further causes the computer to the determining step in the shipbuilding simulation method, it is possible to obtain a simulation result in which building of a ship can be completed within predetermined time.

When the simulation program causes the computer to display an image of at least one of a calculation result and interim passage in the process model creating step, the simulating step and the outputting step, it becomes easy for a user to understand a simulation result through what type of process, and visually check and understand interim process of simulation.

According to the shipbuilding simulation system of the present invention, a user can simulate building of a ship at a detailed operation level, it is possible to improve a factory, improve production design, forecast cost when order is received, and consider investment of equipment, based on building time series information as a result of the precise simulation. Therefore, it is possible to reduce building cost, and shorten a building period.

When the system further includes model changing instructing means, wherein it is determined whether or not a result of the building time series information exceeds an expected target range, and if the result of the building time series information exceeds the expected target range, the model changing instructing means instructs to change at least one of the facility models and the process model within a corresponding range, it is possible to obtain a simulation result in which building of a ship is completed within a range of an expected target.

The facility model obtaining means obtains the equipment information and the worker information of the plurality of factories, the process model creating means creates the process model of each of the factories, the building simulating means carries out the time evolution system simulation for each of the factories for the product model, and a result of the time evolution system simulation of each of the factories is supplied from the information supplying means in a comparable state. In this case, a process model for each a factory is created from one product model, and simulation is carried out using a facility model of each factory. Therefore, it is possible to forecast cost at the time of reception of order when a plurality of factories build a ship in cooperation, and to consider investment of equipment, and it is possible to further reduce building cost, and to further shorten a building period. Further, a user can swiftly and reliably compare a production cost and a building period between factories.

When the facility model obtaining means obtains at least one of the equipment information and the worker information as improvement information of the factory, the building simulating means carries out the time evolution system simulation based on the improvement information of the factory, and the information supplying means supplies the building time series information based on the improvement information, it is possible to simulate when equipment and a worker of a factory are changed and improved by obtaining and using improvement information of the factory.

When the system further includes based on the building time series information, at least one of cost-calculating means of calculating cost concerning building of the ship, part-procuring planning means of creating a purchase plan of a purchased part which is required for building of the ship, and production planning system-cooperating means of coordinating with a production planning system which gestates a production plan related to building of the ship, it is possible to easily obtain cost concerning building of a ship calculated based on building time series information. Further, it is possible to easily obtain a purchase plan of a purchased part created based on the building time series information. Further, the building time series information can smoothly be connected to gestation of a production plan of entire building of a ship.

[BRIEF DESCRIPTION OF THE DRAWINGS]

Fig.1 is a flowchart of a shipbuilding simulation method according to an embodiment of the present invention;
Fig.2 is an entire schematic diagram;
Figs. 3 are diagrams showing examples of a product model;
Fig. 4 is a diagram showing a coupling relation of a five-plate model;
Fig. 5 is a diagram showing a three-dimensional model of a first plate P1;
Fig. 6 is a diagram showing examples of a product model of a three-plate model;
Figs. 7 are diagram showing examples of a three-dimensional model of a facility;
Fig. 8 is a diagram showing examples of the facility model;
Fig. 9 is a conceptual diagram of the process model;
Fig. 10 is a detailed flowchart of a process model creating step;
Fig. 11 is a block diagram expressing a shipbuilding simulation system by means of functional realizing means;
Fig. 12 is a diagram showing examples of an assembling tree of the five-plate model;
Fig. 13 is a diagram showing examples of an assembling tree of the three-plate model;
Fig. 14 is a diagram showing examples expressing a relation of the total tasks as a tree;
Fig. 15 is a diagram showing examples of a task tree of the three-plate model;
Fig. 16 is a diagram showing examples of data of the task tree of the three-plate model;
Figs. 17 are diagram showing examples of allocation of a task to a worker in the three-plate model and order of the tasks;
Fig. 18 is a diagram showing examples of location in an actual simulation space;
Fig. 19 is a diagram showing examples of factory layout information in the three-plate model;
Fig. 20 is a detailed flowchart of a simulating step;
Figs. 21 are diagrams showing a state of simulation utilizing Brains;
Fig. 22 is a diagram showing a pseudocode of the simulating step;
Fig. 23 is a diagram showing a moving task (move) as examples of the basic task;
Fig. 24 is a diagram showing a welding task (weld) as examples of the basic task;
Fig. 25 is a diagram showing a crane moving task (CraneMove) as examples of the basic task;
Fig. 26 is a diagram showing examples of carry task "go to receive";
Fig. 27 is a diagram showing examples of carry task "locating";
Fig. 28 is a diagram showing examples expressing a welding task by means of a combination of the basic tasks;
Fig. 29 is a diagram showing examples constituting a movable mesh among a region surrounding by a wall having two entrances;
Fig. 30 is a diagram showing examples of shape data;

Fig. 31 is a diagram showing examples of welding line data;
Fig. 32 is a diagram showing examples of backside heating line data;
Fig. 33 is a diagram showing examples of product model data;
Fig. 34 is a diagram showing examples of polyline data;
Fig. 35 is a diagram showing examples of assembling tree data;
Fig. 36 is a diagram showing examples of task tree data;
Fig. 37 is a detailed flowchart of outputting processing;
Fig. 38 is a block diagram expressing a shipbuilding simulation system according to another embodiment by means of functional realizing means;
Fig. 39 is a block diagram expressing a shipbuilding simulation system according to another embodiment by means of functional realizing means;
Fig. 40 is a block diagram expressing a shipbuilding simulation system according to another embodiment by means of functional realizing means;
Fig. 41 is a Gantt chart of a calculation result of simulation in an assembling scenario of a case 1 according to an example of the invention;
Fig. 42 is a Gantt chart of a calculation result of simulation in an assembling scenario of a case 2; and
Fig. 43 is a three-dimensional appearance diagram of simulation of the case 2.

[MODE FOR CARRYING OUT THE INVENTION]

A shipbuilding simulation method, a shipbuilding simulation program and a shipbuilding simulation system according to an embodiment of the present invention will be described.

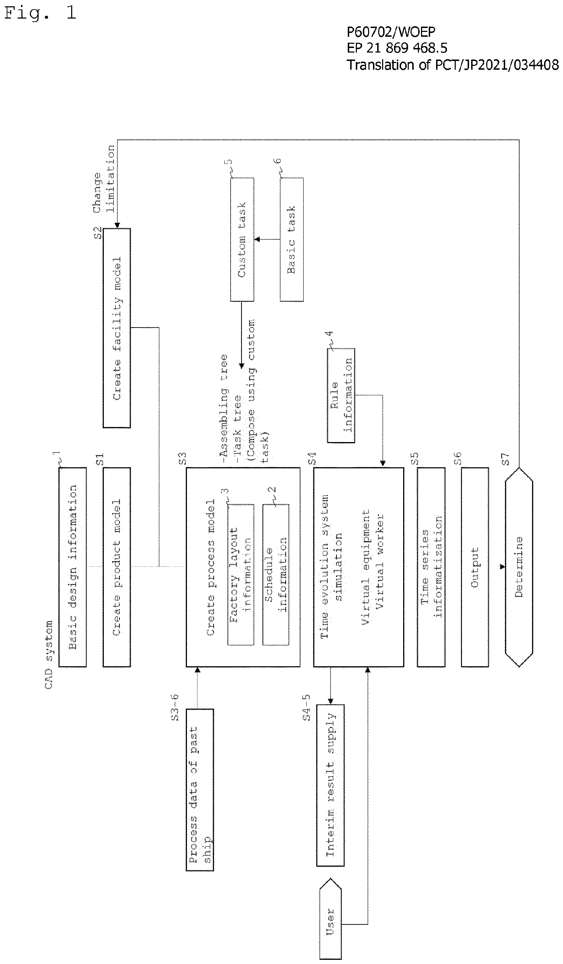

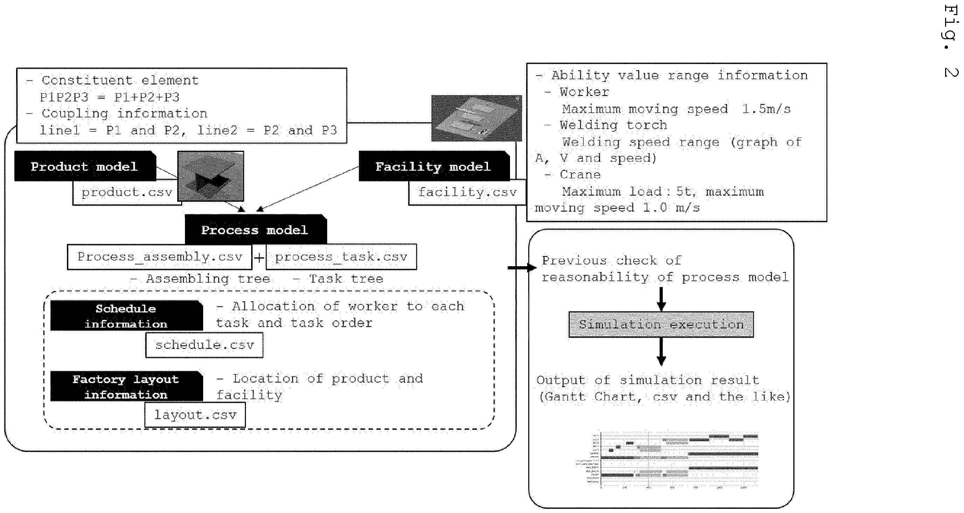

Fig.1 is a flowchart of the shipbuilding simulation method according to an embodiment, and Fig.2 is an entire schematic diagram.

In the shipbuilding simulation method , with the goal of expressing, within building simulation, detailed motion of a worker, i.e., motion of element operation, information required for constructing a virtual shipbuilding factory will be assembled. The shipbuilding factory is constructed from three models, i.e., a product model, a facility (equipment including tools and worker) model, and a process (operation) model. These three models are data which becomes a core required for modeling the shipbuilding factory. To carry out the simulation, schedule information 2 and factory layout information 3 will be defined as two associated information which complements the information.

The product model is a data group which is obtained by systemizing an actual product, and the facility model is a data group which is obtained by systemizing actual equipment or a worker such that they can be handled by simulation. It can also be said that these models are virtual produce, equipment and worker. It can also be said that the process model is a virtual operation system introduced by the product model and the facility model.

In a product model creating step S1 shown in Fig. 1, basic design information 1 in which a coupling relation between a completed part of a ship and a component part composing the completed part is clarified is obtained and the product model is created.

The coupling relation between the completed part of a ship and the component part constituting the completed part is included in the basic design information 1. For example, when the product is a ship hull, the completed part is a block (compartment) constituting the ship hull, and the component part is a plate material constituting the block. The coupling relation is expressed by means of a node (actual material information of part) and edge (coupling information of part).

In this embodiment, the basic design information 1 of a ship is obtained from a CAD system. According to this, the basic design information 1 formed by the CAD system can be effectively utilized for forming the product model. The basic design information 1 of the ship from the CAD system can be obtained through various means not only through a communication line but also through near field communication or storage means. Information including, for example, a coupling relation expressed by means of a node and edge converted from a design CAD data of a ship hull can also be included in the basic design information 1. The information including this coupling relation may be obtained from a thing which is previously converted by the CAD system, or may be obtained by converting after the basic design information 1 is obtained. When the basic design information 1 obtained from the CAD system is held by proprietary data structures of the individual CAD systems, the CAD data is converted into a data structure which can be utilized in simulation in the product model creating step S1.

In the product model, attribution information of a part itself constituting the product and coupling information between parts are defined as information concerning a product to be assembled. Information of operation (assembling procedure and process) concerning assembling of the product is not included in the product model.

It is considered that in the product, parts having substances which are component parts are coupled to each other. The product model is defined using a graph structure expressed by means of a node and an edge based on graph theory. An edge which is coupling between the nodes has no directionality, and it is an undirected graph.

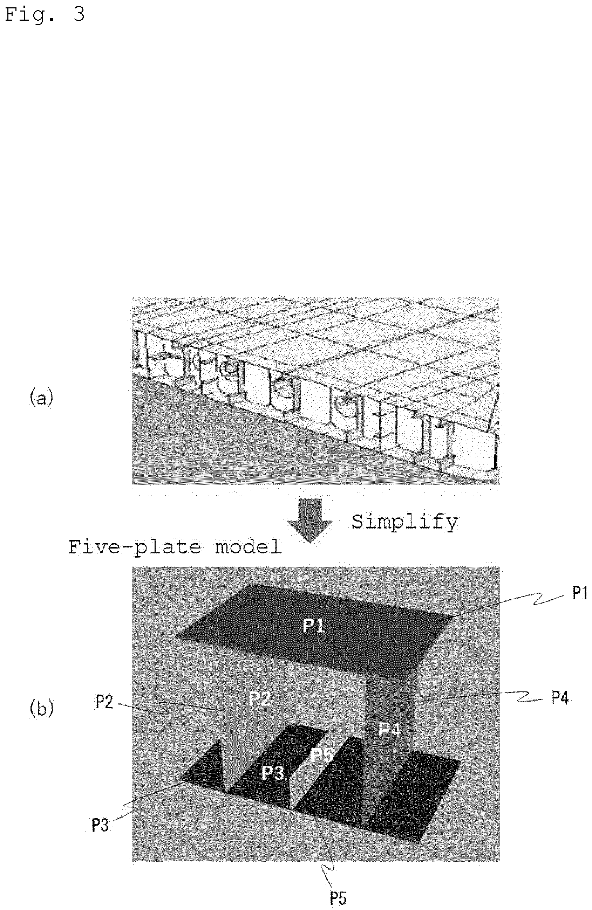

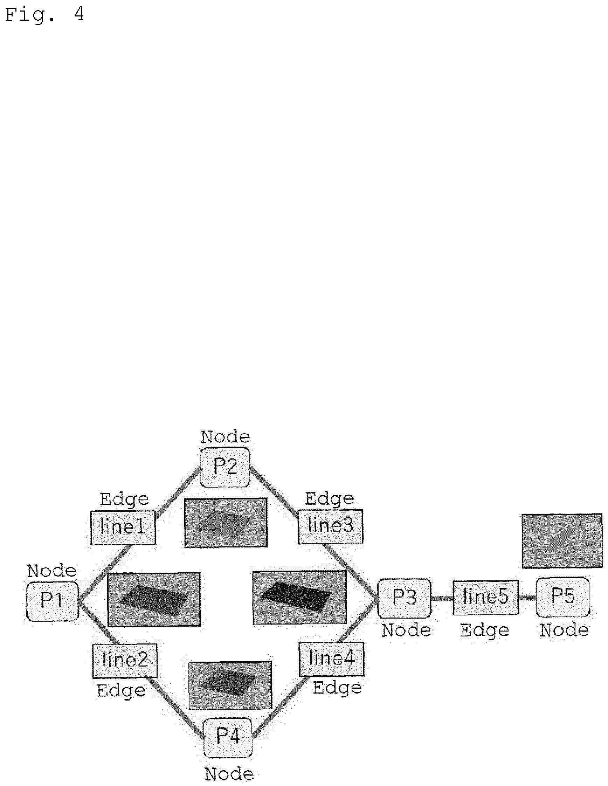

Figs. 3 are diagrams showing examples of a product model, and Fig. 4 is a diagram showing a coupling relation of a five-plate model. The five-plate model in Fig. 4 shows a simplified product model, but a complicated block of a ship hull, a ship body structure and an entire ship can be included as an objective of the product model.

Here, a double bottomed block shown in Fig. 3(a) is an objective of a simplified five-plate model as shown in Fig. 3(b). Although it is not correct in a precise sense, a first plate P1 is recognized an inner bottom, a third plate P3 is recognized as a bottom shell, a second plate P2 and a forth plate P4 are recognized as girders and a fifth plate P5 is recognized as a longitudinal member, and they are simplified. There are no collar plate or floor, the number of longitudinal members is small, and they are different from an actual completed part, but sufficient and essential elements are extracted.

This completed part is defined by means of a coupling relation shown in Fig. 4. The plates P1 to P5 correspond to nodes of component part substances, and lines 1 to 5 which are the coupling relations thereof correspond to edges. Here, the five-plate model is used for simplification, but also in an actual completed part constituted by many component parts, the entire completed part can be defined by the component part substance and the coupling relation thereof. Therefore, it is possible to define the product model using the similar graph expression.

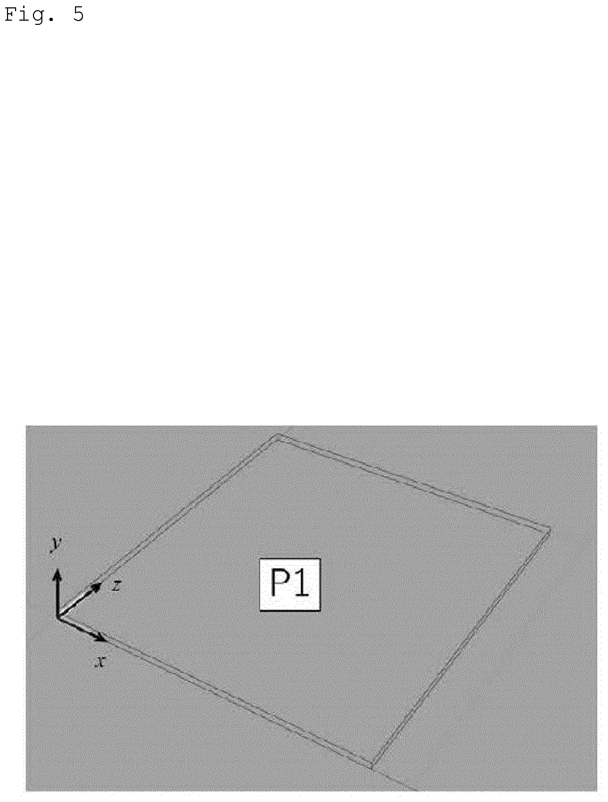

Fig. 5 is a diagram showing a three-dimensional model of a first plate P1.

A shape of a component part of a product can be defined by inputting a 3 DCAD model. As shown in Fig. 5, a coordination system of a three-dimensional model defines a quadrangle (Bounding-box) surrounding an entire member thereof, and the three-dimensional model is located such that among eight apexes of the quadrangle, apexes whose x, y, z coordinate values become minimum are located at original point positions. During execution of simulation, position (local coordination system or coordination in global coordination system) of a reference point and attitude information (Euler angle and quaternion based on initial attitude) defined in the three-dimensional model can be referred as needed.

It is necessary to show joining information of the component parts on an edge showing joining information of the component parts. In this embodiment, position and attitude information of the respective component parts in the coordinate system in the completed state of the completed part is given to it for simplification. More specifically, three-points as reference points are arbitrarily given to each component parts, and information is held by coordinate data indicating where the three-points are located in the completed coordinate system in the completed state. It is possible to calculate a positional relation between arbitrary component parts by using this information.

Welding line information is held by means of three-dimensional information. For example, one welding line is composed of a welding line path (polyline) and a direction vector of a welding torch (normal vector). These information sets are data defined in the coordinate system in the completed state of the completed part, and when a welding task (custom task 5) is actually carried out in simulation, these information sets convert coordination with respect to the welding line data based on the position and the attitude of the component part at that timing. The direction if the torch is also defined in addition to the welding line path, a position of a worker who is welding can be defined. Further, since the direction of the torch during the welding operation can be recognized, it is possible to determine the welding attitude.

As described above, the coupling relation between the component parts, joining data in the coupling portion, the position and angle of the component part in the completed part are included in the product model. There is a case where a portion of data required for creating the product model in the basic design information 1 obtained by the CAD system is not included depending upon performance of the CAD system. For example, the number of CAD systems which handle backside heating line data is small. In such a case, data required for creating the product model which is not included in the basic design information 1 is created in the product model creating step S1.

If the above-described data is summarized, the product model is summarized as information of node and edge as shown in the following tables 1 and 2.

[Table 1]

| Attribution name | Explanation |
|---|---|
| Node name | Node name of itself (name of component part) |
| Completed part name | Name of completed part |
| Coordinate conversion information | Three-point information defining position and attitude of itself in completed state |
| Attribution information of component part | Attribution information of component part such as weight |
| Edge | Edge connected to itself |
| Three-dimensional object | Three-dimensional object placed in simulation space |

[Table 2]

| Attribution name | Explanation |
|---|---|
| Edge name | Name of edge of itself |
| Node 1 | Node 1 connected to itself |
| Node 2 | Node 2 connected to itself |
| Attribution information of edge | Attribution information such as welding line data |

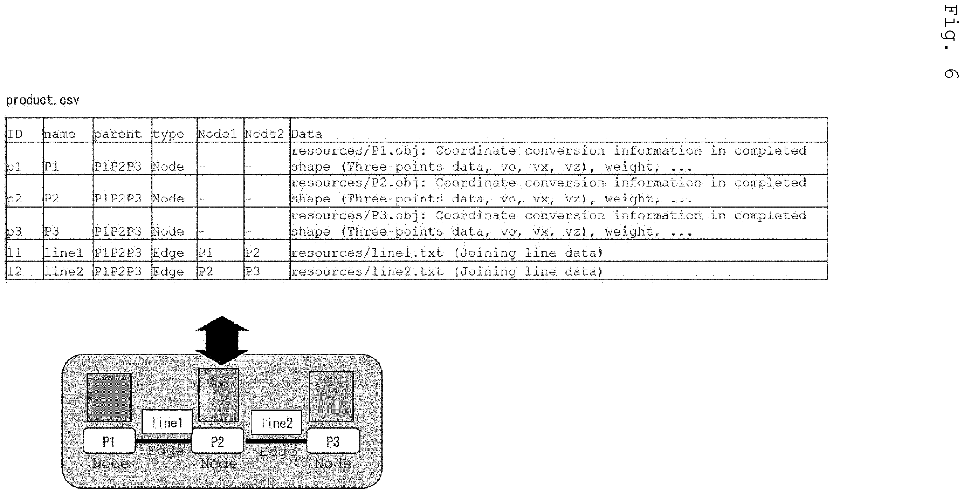

Fig. 6 is a diagram showing examples of a product model of a three-plate model.

Fig. 6 shows a product model which is database in which joining relation between component parts (first plate P1, second plate P2 and third plate P3). "name" represents name, "parent" represents parent product, and "type" represents type. Three reference coordinate points (vo(0,0,0), vx(1,0,0), vz(0,0,1)) of the plates P1 to P3 are omitted. In the data should be the described objective ID, but it is described as "name" for explanation.

As described above, information of operation (process) concerning assembling is not included in the product model.

Referring back to Fig. 1, in the facility model creating step S2, equipment information of a factory which builds a completed part and worker information are obtained, and a facility model concerning equipment (virtual equipment) and a worker (virtual worker) concerning building of the completed part is created. Information of a tool is included in the equipment information.

The facility model defines an ability value having individual facility as information concerning facility of a factory in addition to individual name (e.g., welding machine No.1) of the facility and type (e.g., welding machine). A maximum value (range) of function of the facility is defined for the ability value. For example, examples of one of ability values of a crane are a lifting load and speed, and an ability value range thereof is a maximum lifting load and maximum speed.

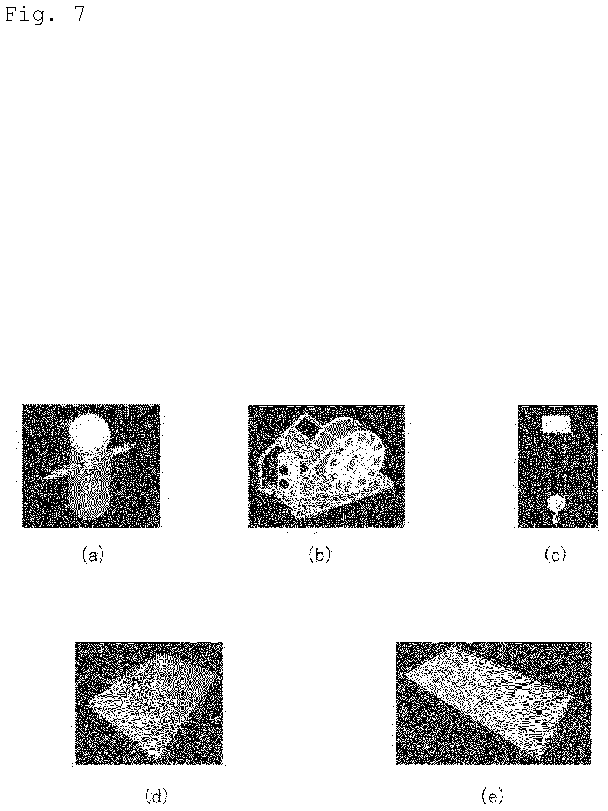

Not only a product, but also a facility can be an obstacle on a moving path of a worker. Therefore, a shape is defined using a three-dimensional model. According to this this, in a simulator, it is also possible to determine three-dimensional interference between objects. Here, Figs. 7 show examples of the three-dimensional model of the facility, wherein Fig. 7(a) shows a worker, Fig. 7(b) shows a welding machine, Fig. 7(c) shows a crane, Fig. 7(d) shows a floor and Fig. 7(e) shows a surface plate.

Specific attribution information held by a facility model is shown in the following table 3.

[Table 3]

| Attribution name | Explanation |
|---|---|
| Name | Name of facility |
| Type | Type of facility |
| Inherent ability value | Ability value range inherent to facility |
| Three-dimensional object | Three-dimensional object placed in simulation space |

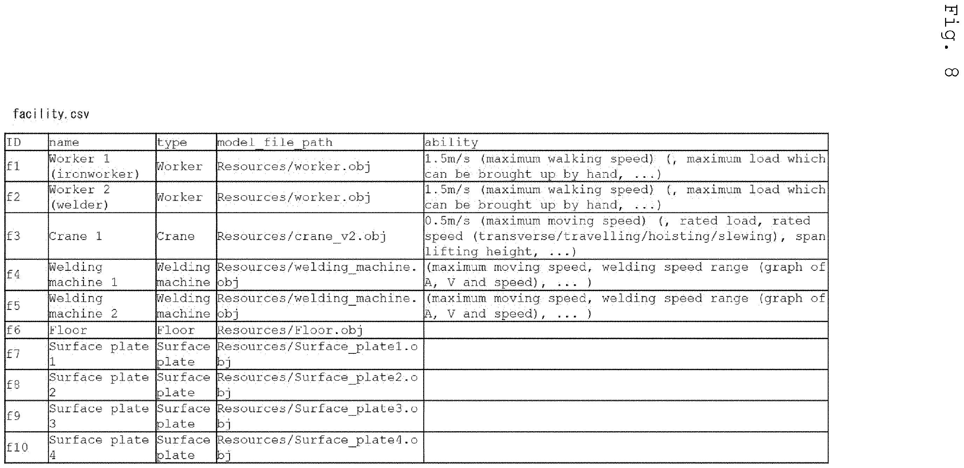

Fig. 8 is a diagram showing examples of the facility model. Fig. 8 shows the facility model which is database in which facility of a factory is registered. "name" is a name, "type" is type, "model_fwile_path" is a shape (three-dimensional model data), and "ability" is ability (ability value range of facility is defined).

As described above, the completed part and component part in the product model and equipment of the factory in the facility model is expressed by means of the three-dimensional model. By utilizing the three-dimensional model, it is possible to enhance the precision of simulation.

Referring back to Fig. 1, in a process model creating step S3, based on the product model and the facility model, assembling procedure and tasks to assemble the component part to build the completed part are clarified and the process model is created. Here, it is important that the product model and the facility model are first created and the process model is created thereafter. By proceeding the procedure in this order, the process model can reliably be created without tracking the process backward, and later process can be carried out without delay.

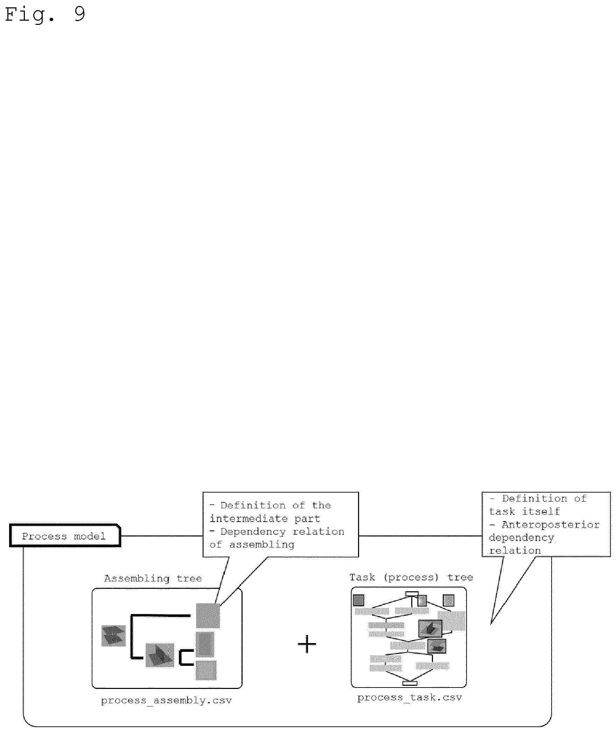

Fig. 9 is a conceptual diagram of the process model.

The process model is data in which operation information concerning a sequence of assembling steps is defined. The process model is provided with and composed of an assembling tree expressing a dependence relation in which the component part is assembled to form the completed part, tasks which are required for assembling, and a task tree expressing a dependence relation of the tasks. According to this, the assembling procedure and the tasks related to the procedure are clarified, and the process model can precisely be created. Here, the task means a single operation including a custom task 5.

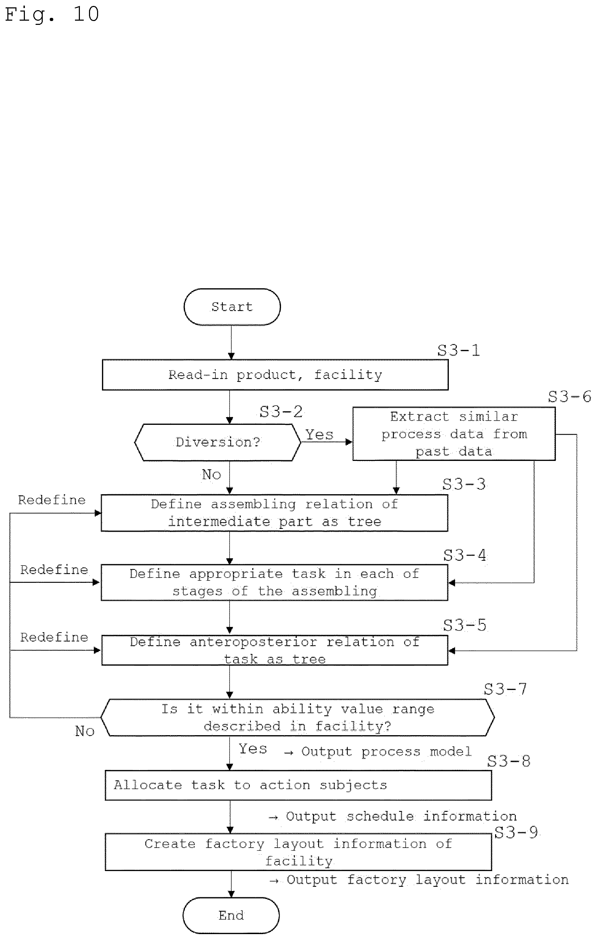

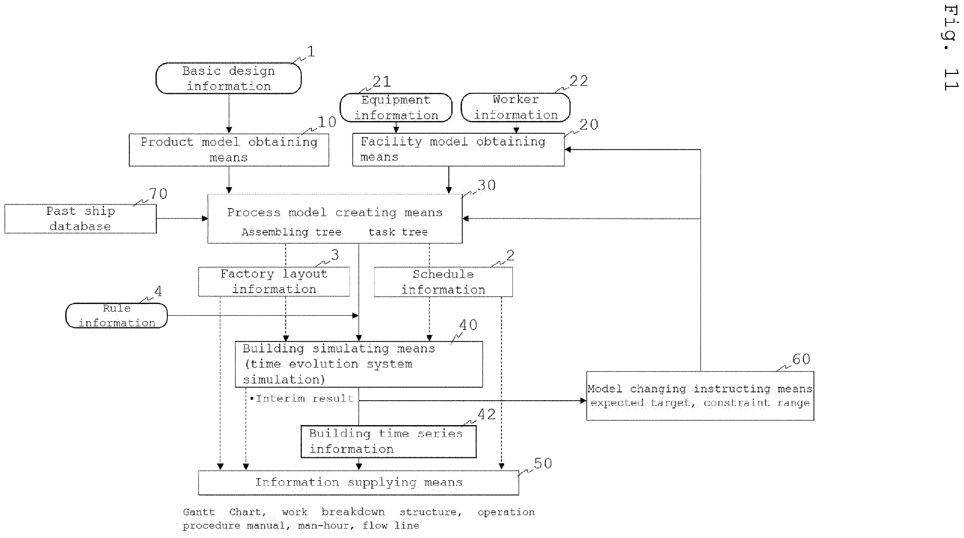

Fig. 10 is a detailed flowchart of the process model creating step, and Fig. 11 is a block diagram expressing a shipbuilding simulation system by means of functional realizing means. Here, a creating of a process model using the shipbuilding simulation system will be described.

The shipbuilding simulation system is for executing a shipbuilding simulation method. The shipbuilding simulation system includes product model obtaining means 10, facility model obtaining means 20, process model creating means 30, building simulating means 40, information supplying means 50, model changing instructing means 60 and past ship database 70. The past ship database 70 stores process data of the past ship built in the past.

In the process model creating step S3, the process model creating means 30 first obtains a product model formed in the product model creating step S1 by the product model obtaining means 10, obtains facility model formed in the facility model creating step S2 by the facility model obtaining means 20, and reads the same (process model creating information reading step S3-1) .

Next, for creating the process model, process data of the past ship built in the past referred from the past ship database 70, and it is selected whether it should be diverted or not (diversion determining step S3-2) .

When it is selected not to diverse in the diversion determining step S3-2, the process data of the past ship is not referred, assembling procedure including intermediate part of the component part is defined as the assembling tree (assembling tree defining step S3-3), an appropriate task in each of stages of the assembling procedure is defined (task defining step S3-4), and an anteroposterior relation as a dependence relation of the task is defined as a task tree (task tree defining step S3-5) .

On the other hand, if it is selected to diverse in the diversion determining step S3-2, similar process data is extracted from the past ship database 70 (past ship process data extracting step S3-6), and the process data of the past ship extracted in the assembling tree defining step S3-3, the task defining step S3-4, and the task tree defining step S3-5 is referred and diverted. If the process data of the past ship is diverted, when the product model or the facility model is changed based on the basic design information 1, it is possible to create the process model swiftly and precisely with effort smaller than that required for creating the process model from the beginning.

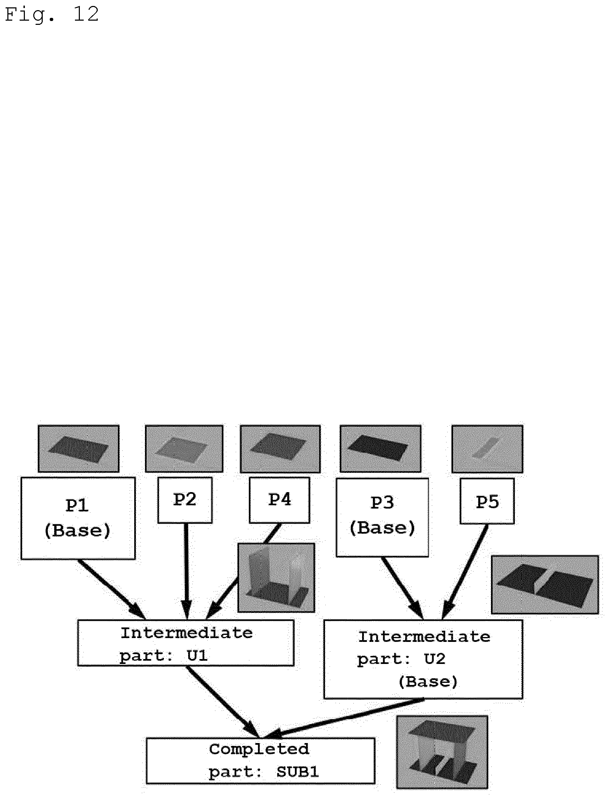

Fig. 12 is a diagram showing examples of an assembling tree of the five-plate model.

In the assembling tree defining step S3-3, information (name and attitude of part) of the intermediate part and the anteroposterior relation of the assembling operation are defined in the assembling tree. Since the anteroposterior relation exists in the assembling order of the parts, the assembling tree is expressed by means of a directed graph. The intermediate part is a component part in a state where some members are coupled, and by assembling the intermediate part and a member, or the intermediate parts, they become a completed part. Fig. 12 shows a state where the first plate P1, the second plate P2 and the fourth plate P4 are combined to form an intermediate part U1, the third plate P3 and the fifth plate P5 are combined to form a second intermediate part U2, and the first intermediate part U1 and the second intermediate part U2 are combined to form a completed part SUB1. When the first intermediate part U1 is assembled, the first plate P1 acts as a base, when the second intermediate part U2 is assembled, the third plate P3 acts as a base, and when the completed part SUB1 is assembled, the second intermediate part U2 acts as a base.

Attribution information which is required for defining the assembling tree is shown in the following table 4. These information sets are defined in all of the intermediate parts and the completed part.

[Table 4]

| Attribution name | Explanation |
|---|---|
| Name of part | Name of part of itself |
| Coordinate conversion information | Information defining position and attitude in completed state of itself |
| Name of base part | Name of base part of child part group of itself |
| Parent part | Part which become parent of itself |
| Child part group | Part group which become child of itself |
| Position and attitude data of child part group | Information defining position and attitude of child part in coordinate system of itself |

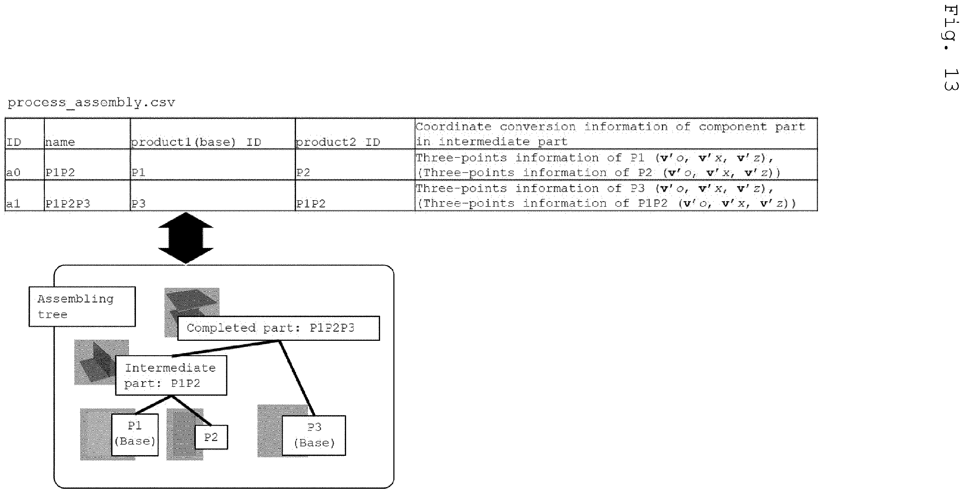

Fig. 13 is a diagram showing examples of an assembling tree of the three-plate model, "name" is name, "product 1 (base)" is a part which acts as a base among parts to be joined, "product 2" is a part to be joined, "coordinate conversion information of a component part in the intermediate part" is definition of the intermediate part. Three reference coordinate points (vo(0,0,0), vx (1,0,0), vz(0,0,1)) of the intermediate part and the completed part are omitted. In the data should be the described objective ID, but it is described as "name" for explanation.

In the three-plate model in Fig. 13, the first plate P1 and the second plate P2 are combined to form the intermediate part, and the third plate P3 is combined with the intermediate part to form the completed part. When the intermediate part is assembled, the first plate P1 acts as a base, and when the completed part is combined, the third plate P3 acts as a base.

In the task tree defining step S3-5, information required for tasks and anteroposterior relation information of the tasks are defined in the task tree. For example, in the task defining step S3-4, three types of tasks shown in the following table 5 are defined.

[Table 5]

| Task name | Explanation |
|---|---|
| Carry | Carry target part to designated place using facility which designates |
| Temporary welding | Weld objective parts to each other in accordance with designated welding line information using designated facility (welding machine and crane) |
| Regular welding | Weld designated parts to each other in accordance with designated welding line information using designated facility (welding machine) |

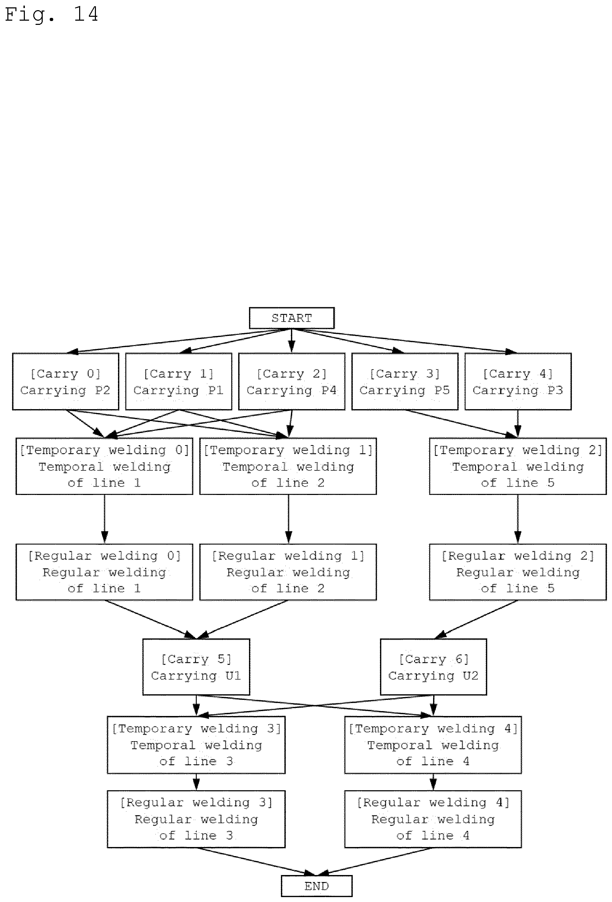

Here, Fig. 14 is a diagram showing examples expressing a relation of the total tasks as a tree.

Fig. 14 is assumed scenario that the completed part is assembled by carrying the plates (steel plates) P1 to P5 for five-plate model at predetermined positions and carrying out temporary welding and regular welding.

Since the anteroposterior relation exists in the tasks, the task tree is expressed by means of the directed graph in the task tree defining step S3-5. For example, a task [temporary welding 0] means that it cannot be started unless all of tasks of [carry 0], [carry 1] and [carry 2] are completed.

Specific attribution information of the task tree is shown in the following table 6. For example, the following information is defined in the task [carry 0]. That is, an object [second plate P2] is carried such that this object is located at a position (8m, 0m, 2m) on an object [surface plate 2] at an Euler angle (0, 0, 0) using facility [crane 1]. A coordinate of a start point is not defined in the carry task, and it is started from a coordinate in an execution timing of the task when simulation is carried out. Similarly, the following information is defined in the [regular welding 0]. That is, an edge [line 1] (coupled portion between the first plate P1 and the second plate P2) is regularly welded to an objective using the facility [welding machine 2] at the speed of 0.2 m/s. This task cannot be started unless the task [temporary welding 0] is completed. As information of a welding path, information associated with the edge of the product model is referred.

[Table 6]

| Attribution name | Explanation |
|---|---|
| Name | Name of task |
| Type | Type of task |
| Object group | Object group which is objective in task |
| Facility group | Facility group utilized in task |
| Precedent task group | Task group which must be completed until task is started |
| Task information | Necessary information inherent to execution of task |

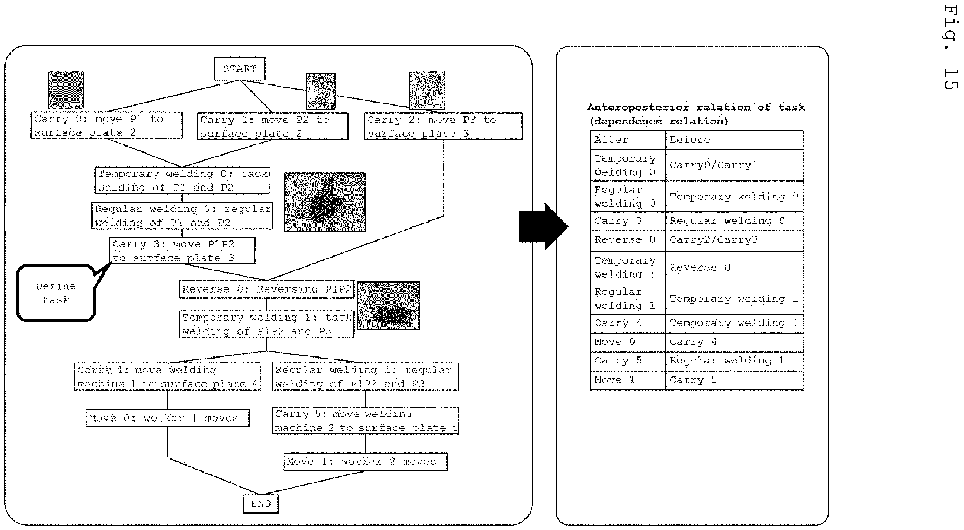

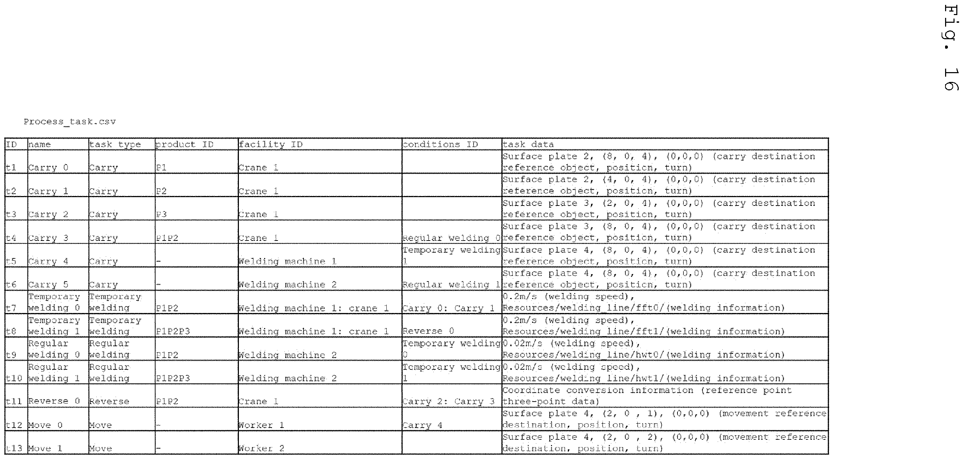

Fig. 15 is a diagram showing examples of the task tree of the three-plate model, and a right table expresses a left graph diagram. Fig. 16 is a diagram showing examples of data of the task tree of the three-plate model. In Fig. 16, "name" is name, "task type" is type, "product" is a related part, "facility" is related facility, "conditions" is task tree information, and "task data" is task information (inherent data required for that task). In the data should be the described objective ID, but it is described as "name" for explanation.

As shown in Fig. 15, this example is assumed scenario that the completed part is assembled by carrying the plates (steel plates) P1 to P3 for three-plate model at predetermined positions and carrying out temporary welding and regular welding.

As shown in Fig. 10, in the process model creating step S3, the process model creating means 30 creates schedule information 2 of a worker based on assembling procedure and task (schedule information creating step S3-8).

As shown in Fig. 10, it is important that the assembling procedure is first determined and a task is determined later. According to this, the process model can reliably be created without tracking the process backward, and later process can be carried out without delay. That is, the assembling tree is first created and the task tree is created later.

The created schedule information 2 is output to a monitor or the like. The schedule information 2 is the allocation of tasks, including their order to a worker as each action subject. According to this, it is possible to precisely replicate and simulate all of production actions of the worker including the main operation and the associated operation based on the schedule information 2. The schedule information 2 is provided to a user from a monitor or printer of the information supplying means 50. According to this, the user can check the created schedule information 2 as necessary. It is also possible to provide the schedule information 2 to the user only when the requires.

Although information concerning the assembling tree and the task tree is defined in the process model, the schedule information 2 defines allocation of a worker in charge and specific execution order of tasks for the respective tasks defined in the task tree.

A forming example of the schedule information 2 is shown in the following table 7. In this example, a worker 1 is assumed to be an ironworker, and a carry task and temporary welding task are allocated. The worker 1 starts from a task [carry 0], and sequentially carries out up to a task [temporary welding 4]. On the other hand, a worker 2 is assumed to be a welding person, and regular welding tasks are allocated in a sequential order. The worker 2 starts from a task [regular welding 0], and sequentially carries out up to a task [regular welding 3].

[Table 7]

| Person in charge | Task in charge and execution order |
|---|---|
| Worker 1 | Carry 0, carry 3, carry 2, carry 1, carry 4, temporary welding 1, temporary welding 2, carry 5, carry 6, temporary welding 3, temporary welding 4 |
| Worker 2 | Regular welding 0, regular welding 1, regular welding 2, regular welding 4, regular welding 3 |

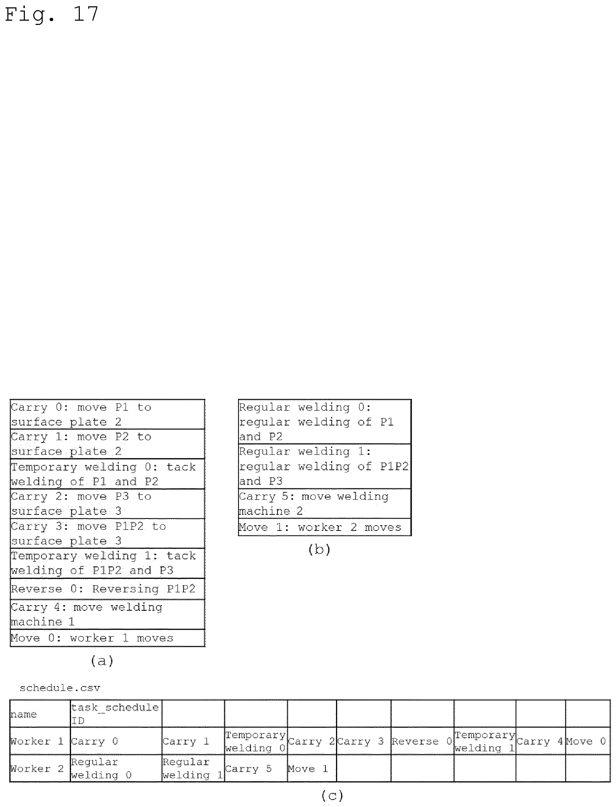

Figs. 17 are diagram showing examples of allocation of a task to a worker and order of the tasks in the three-plate model shown in Figs. 15 and 16. Fig. 17(a) shows allocation and order of tasks to the worker 1, Fig. 17(b) shows allocation and order of tasks to the worker 2, and Fig. 17(c) shows data type schedule information. In the data should be the described objective ID, but it is described as "name" for explanation.

As shown in Fig. 10, in this embodiment, before a schedule information creating step S3-8, it is determined whether a task exceeds an ability value range of facility based on the facility model (ability value range determining step S3-7). When it is determined that the task does not exceed the ability value range in the ability value range determining step S3-7, the procedure proceeds to the schedule information creating step S3-8 and the schedule information 2 is created. By creating the schedule information 2 when it is determined that the task does not exceed the ability value range of facility, it is possible to prevent simulation exceeding ability values of the facility and the task from being carried out and the schedule information 2 from being created. The created process model is output to a monitor or the like of the information supplying means 50 and the process model is supplied to a user.

On the other hand, when it is determined that the task exceeds the ability value range of facility in the ability value range determining step S3-7, the procedure is returned to the assembling tree defining step S3-3, the task defining step S3-4 and the task tree defining step S3-5, and at least one of definition of the intermediate part, definition of the assembling tree, definition of task and definition of the task tree which can be corresponded is redefined. By redefining each of definitions, it is possible to create a more precise process model.

After the schedule information creating step S3-8, factory layout information 3 concerning location of equipment and a worker which are actually used in the time evolution system simulation is created based on the assembling procedure and the task (factory layout information creating step S3-9). According to this, it is possible to carry out the simulation based on the factory layout information 3 on which the locations of the equipment and the worker are reflected.

The created factory layout information 3 can be output and displayed on a monitor or a printer of the information supplying means 50. According to this, the user can check the created factory layout information 3 as necessary. It is also possible to provide the factory layout information 3 to the user only when the requires.

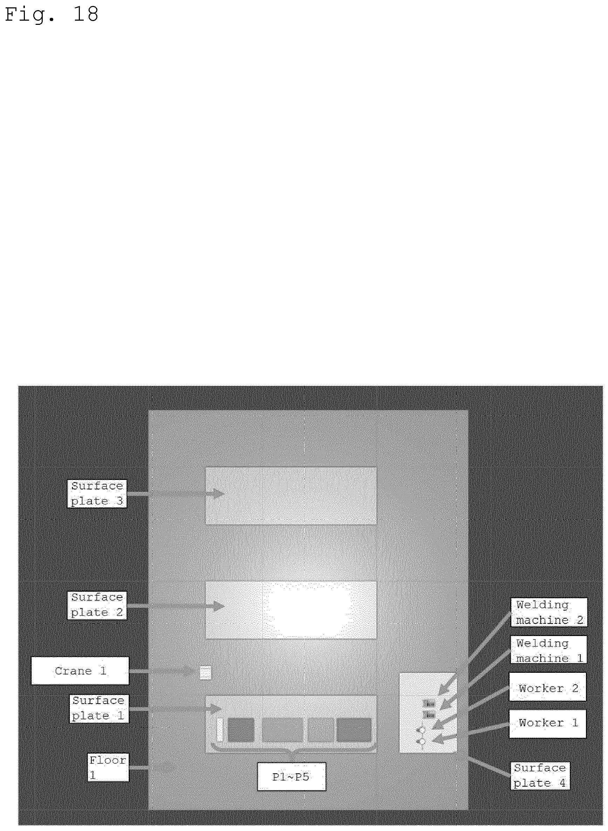

The location information in a factory is not defined in the product model and the facility model which are defined until now. Hence, in the factory layout information 3, initial locations of the objects are defined. Required attribution information is shown in the following table 8. Fig. 18 is a diagram showing examples of location in an actual simulation space.

[Table 8]

| Attribution name | Explanation |
|---|---|
| Object name | Name of the product or facility to be placed in the simulation space |
| Reference object name | Object which is standard of placement |
| Coordinate information | Positions (x, y, z) placed with respect to reference object Positions placed with respect to reference object (x, y, z) |
| Attitude information | Attitude placed with respect to reference object (Euler angles, $\phi$, $\theta$, $\psi$) |

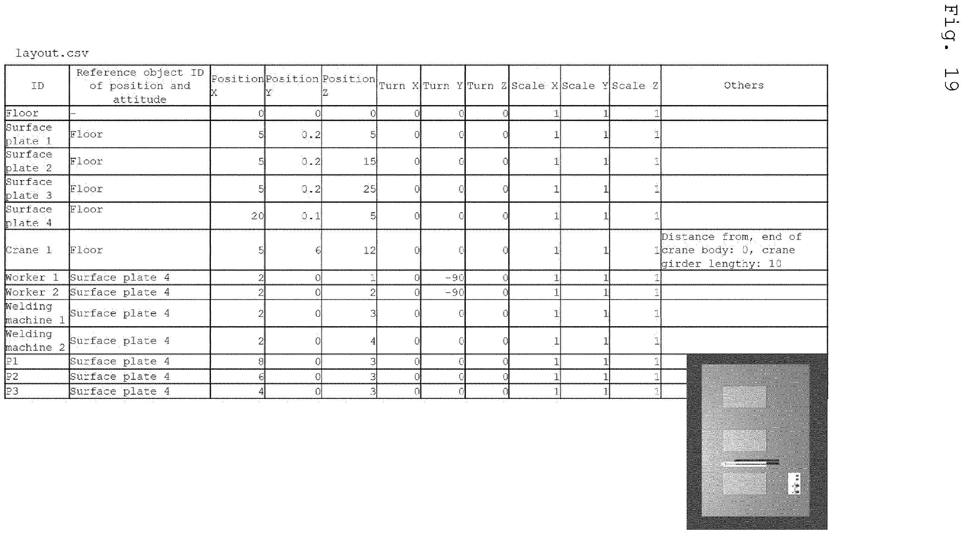

Fig. 19 is a diagram showing examples of factory layout information in the three-plate model. In the data should be the described objective ID, but it is described as "name" for explanation. A part which is actually utilized for simulation and location information of a facility are defined in layout.csv from databases of the product model and the facility model.

After the process model creating step S3, the procedure is shifted to a simulating step S4 as shown in Fig. 1. In the simulating step S4, the building simulating means 40 carries out time evolution system simulation (time evolution on three-dimensional space) which sequentially calculates a progress status of building hourly based on the created process model.

In the simulating step S4, positions of each facilities and product on the three-dimensional platform or an occupation status, and a proceeding status of the custom task 5 are changed based on the process model, thereby simulating the building in the shipbuilding. It is also possible to give random number to daringly deteriorate precision of the intermediate part, and this influence is simulated up to a downstream step. Regarding the relationship between the custom task 5 and the task tree, the custom task 5 are expressed as a tree structure of anteroposterior relation, and connected together to form the task tree. In this embodiment, the three-dimensional platform is constructed utilizing Unity (Registered Trademark) which is a game engine.

If three of variables $x_f$, $x_p$ expressing positions, angles and occupations of each facility and product at time t, and $s_t$ expressing non-completed or completed of the custom task 5 in the process model are defined as arguments, it is possible to express variations of $x_f$, $x_p$ and $s_t$ to the next time t+1 by changing the arguments related to the task in accordance with previously set rule in the order of the custom task 5 described in a schedule defined in the process model creating step S3. According to this, time history of each of the arguments is output.

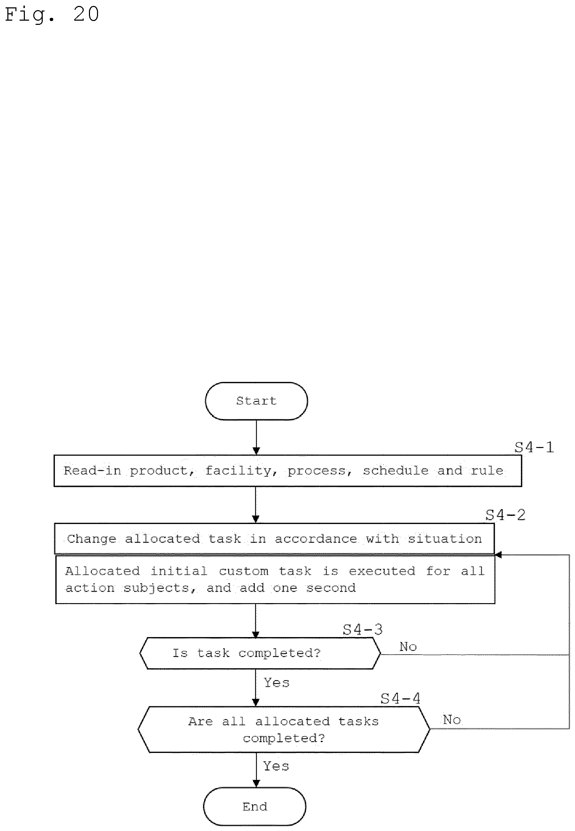

Fig. 20 is a detailed flowchart of a simulating step. Before the building simulating means 40 shown in Fig. 11 carries out the time evolution system simulation, a worker autonomously obtains rule information 4 for proceeding virtual operation from rule information database or the like. The product model created in the product model creating step S1 obtained by the product model obtaining means 10, the facility model created in the facility model creating step S2 obtained by the facility model obtaining means 20, the process model created by the process model creating means 30 in the process model creating step S3, the schedule information 2 and the factory layout information 3 are obtained and read, and objects are located on the three-dimensional platform (simulation execution information reading step S4-1) based on the factory layout information 3.

Here, the rule information 4 is a constraint or option which is required for autonomous decision made by the building simulating means 40. For example, in a welding task (custom task 5), only types of welding machines which can be used are designated as the rule information 4, and the building simulating means 40 autonomically determines which machine should be used during simulation.

That is, the rule information 4 describes how a virtual worker determines in the simulation. By utilizing the rule information 4, it becomes easy for a worker in the simulation to reliably proceed a virtual operation. The rule information 4 is previously created before the simulating step S4 like a catalogue. It is also possible to autonomously learn, create and obtain the rule information 4 by reinforcement learning or a multiagent. As a method for creating the rule information 4 autonomously by the reinforcement learning or the like, a technique in which an agent freely moves in the building simulating means 40 and effectively learns the rule and the rule information 4 is produced is used. One example of the rule information 4 is as shown below.

Rule 1A: A vacant and near tool is obtained.

Rule 1B: A vacant and near tool is obtained also in a subsequent step.

Rule 2: When cranes are used, cranes which do not hinder other steps by interference between the cranes are selected.

Rule 3: A magnetic hoisting attachment is placed on a wagon after usage.

Rule 4: For a subsequent step having the same operation place, tools are collectively brought.

These rules are allocated to a worker before the simulating step S4 as shown below for example.

Worker 1: Rule 1A.

Worker 2: Rule 1B, rule 2, rule 3, rule 4

The worker 1 is assumed to be a new hire, and the worker 2 is assumed to be a skilled people. Since a new worker works while only thinking about him or herself, the new worker may hinder other steps.

By the rule information 4, task information and the schedule information 2 which are not input are automatically constructed during execution of the time evolution system simulation. In this embodiment, Brains which are determination rules given to a worker are included as the rule information 4.

The Brains correspond to the custom tasks 5 on a one-to-one basis, and the Brains are constructed before the time evolution system simulation is executed. The Brains are sequentially operated on the time evolution system simulation. According to this, a determining manner of the worker is replicated in accordance with a status in the time evolution. Therefore, the worker can determine operations like especially shipbuilding steps which are not repetitive operations but which require on factory floor extremely many determinations utilizing the Brains, and can smoothly proceed virtual operations. Contents determined by the Brains which are one of the rule information 4 can broadly be divided into the following four.

1. Necessary arguments for any one custom task 5 is determined.
2. One of a plurality of custom tasks 5 belonging one type (task type) is selected.
3. One type of a plurality of types of custom tasks 5 is selected.
4. Countermeasure when competition occurs during execution of the custom task 5 is selected based on rules.

In a determining method by the Brains, a candidate group is first created as a combination of arguments, evaluation parameter is extracted for each of the candidate groups, an evaluation value based on a predetermined evaluation value rule is calculated, and the highest evaluation value is finally selected.

Extraction of the evaluation parameter, the predetermined rule, and selection based on the evaluation value are as described below on the base of a carry task as an example, respectively.

[Extraction of evaluation parameter]

The evaluation parameter group concerning determination is sequentially obtained during the time evolution system simulation.

- p1: Distance from current position of a worker to a product
- p2: Distance from product to crane
- p3: Distance from product to destination (destination is automatically calculated)
- p4: Whether base plate or not (0 or 1)
- p5: Can it move without interference (0 or 1)

[Evaluation value rule]

$$V=(p4-0.2*(p1+p2+p3))*p5$$

[Selection]

A task which obtains the maximum evaluation value among evaluation values which are greater than 0 is selected.

Task 1: v1
Task 2: v2
Task 3: v3

The evaluation value rule of the Brains is constructed by manual or machine learning.

When the evaluation value rule is constructed manually, a rule is estimated and constructed through a result off video analysis or hearing for a worker.

When the evaluation value rule is constructed by machine learning, there are two constructing methods. The first constructing method is to obtain data concerning a worker in a shipbuilding factory, a tool and motion of a product by monitoring using a camera and a position sensor or the like, and from the large amount of data obtained, a parameter X such as a distance between the worker and the product, a distance between thee worker and the tool and the like, and a task selection result (determination history) Y of the worker are organized, the organized data is defined as training data, and this is constructed as a machine learning model such as neural network which forecasts the task selection result Y from the parameter X. The second constructing method is to set a goal, for example, which is better when time is shorter, reinforcement learning having this goal as reward is applied, and optimal strategy is automatically constructed.

Examples of the task type-by-task type Brains are shown in the following table 9. In the table, "AtBrain" shows the Brains of carry At, "FtBrain" shows the Brains of tack welding At, "WtBrain" shows the Brains of regular welding Wt, and "DtBrain" shows the Brains of backside heating Dt.

[Table 9]

| Brains | Automatically determined items *all arguments are common, list of all tasks which can be started |
|---|---|
| AtBrain | (Select task): list of AtPick and AtPlace (used synonymously with determination of objective)<br>(Determine arguments): utilizing facility name (crane), reference object, coordinate value, and Euler angle of carry destination |
| FtBrain | (Select task): one Ft (used synonymously with determination of objective)<br>(Determine arguments): utilized facility name (welding machine, power source) |
| WtBrain | (Select task): one Wt (used synonymously with determination of objective)<br>(Determine arguments): utilized facility name (welding machine, power source) |
| DtBrain | (Select task): one Dt (used synonymously with determination of objective)<br>(Determine arguments): utilized facility name (burner name, gas spout) |

Concerning the custom task 5, arguments which is automatically determined in simulation, and arguments which is previously constructed in the task tree are shown in the following table 10. The underlined arguments are those which are automatically determined arguments, and the non-underlined arguments are those which are previously constructed.

[Table 10]

| Task type | Function name | Arguments |
|---|---|---|
| | | (common): task name, task type, function name, objective, <u>utilized facility</u>, antecedent task, <u>subjective</u> <u>name</u>, required facility type and number of pieces |
| Carry At | AtPick | (Inherent) : - |
| | AtPlace | (Inherent): <u>reference object</u>, <u>coordinate value (x, y, z)</u>, <u>and Euler angle (θ, ϕ, ψ) of</u> <u>carry destination</u> |
| Tack welding Ft | Ft | (Inherent): - |
| Regular welding Wt | Wt | (Inherent): - |
| Backside heating Dt | Dt | (Inherent): - |

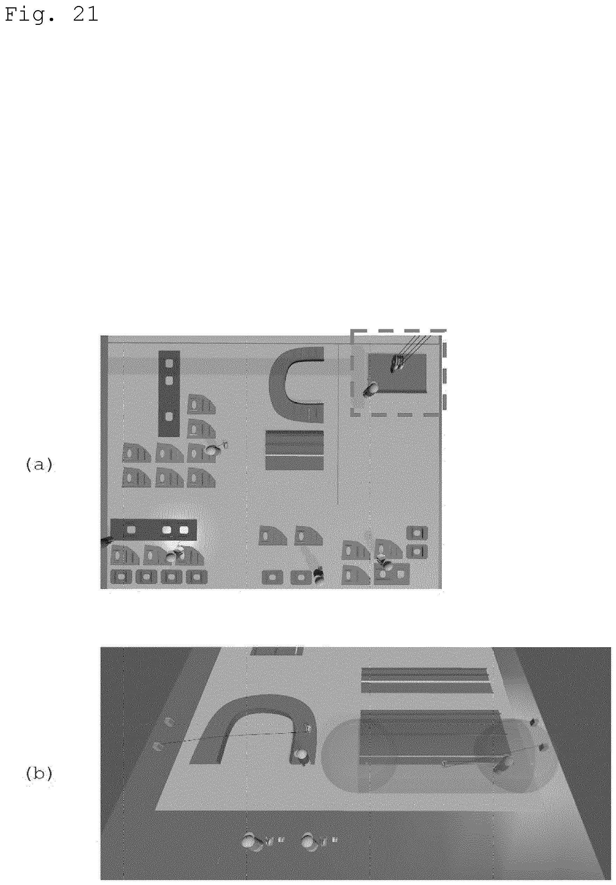

Figs. 21 are diagrams showing a manner of simulation utilizing the Brains, wherein Fig. 21(a) shows a carry task and Fig. 21(b) shows a welding task.

In the carry task, constraint of a carry place, and a locating position are automatically determined.

In the welding task, evaluation parameters such as a position of a welding line are obtained, and an evaluation value is calculated. In the evaluation value calculation, a welding region is into account, such as another operation is not carried out near a welding worker.

After the simulation execution information reading step S4-1 in Fig. 20, among the custom task 5 described in the schedule information 2, a task existing at the front is executed for all action subjects, and one second is added to time (task executing step S4-2). The custom task 5 is previously defined as a method, and an allocated custom task 5 is changed based on the rule information 4 in accordance with a status.

In the time evolution system simulation, sequentially calculates an hourly position of the completed part or the component part, positions and occupation statuses of the equipment and the worker, and the assembling procedure and the progress status of the task. According to this, it is possible to precisely carry out the time evolution system simulation.

Next, it is determined whether the custom task 5 is completed (task termination determining step S4-3) .

In the task termination determining step S4-3, if it is determined that the custom task 5 is not completed, the procedure is returned to the task executing step S4-2, and the custom task 5 is executed.

On the other hand, if it is determined that the custom task 5 is completed in the task termination determining step S4-3, the completed custom task 5 is deleted from the top of the schedule, and it is determined whether all of the allocated custom tasks 5 are completed (simulation termination determining step S4-4) .

In the simulation termination determining step S4-4, when it is determined that all of the allocated custom tasks 5 are not completed, the procedure is returned to the task executing step S4-2, and the custom task 5 is executed.

On the other hand, in the simulation termination determining step S4-4, when it is determined that all of the allocated custom tasks 5 are completed, the simulation is completed. In this manner, the simulation is repeatedly executed until all of scheduled custom tasks 5 are deleted.

Further, as shown in Fig. 1, in the simulating step S4, an interim result of the time evolution system simulation for the user to make a decision is supplied from the information supplying means 50 (interim result supply step S4-5). The interim result of the simulation is supplied to a user whenever the task executing step S4-2 is completed for example. Based on the supplied interim result, the user determines whether the simulation is continued as it is or the custom task 5 is changed and next simulation is carried out. According to this, the user determines based on the interim result and it becomes easy to carry out simulation suited to the intention of the user.

ON/OFF of the supply of the interim result from the information supplying means 50 in the interim result supply step S4-5 can arbitrarily be selected when the user pushes an execution button of simulation for example, and when OFF is selected, the supply is not executed. On the other hand, when ON is selected, for example, a monitor is brought into a browse mode, a simulation status is supplied in a flowing manner just as animation, and the user can sequentially check this status when the user presses a momentary pause button or a play button. When the user presses the pause button, the user can see an already completed custom task 5, a custom task 5 which is being executed, and a scheduled custom task 5 which is not yet carried out. For example, order of the scheduled custom tasks 5 can be changed, and a tool which is used for that custom task 5 can be changed or designated. After the change, if the play button us pressed, the simulation is restarted, and proceeds in accordance with the changed scenario. In the time evolution system simulation of the simulating step S4, a virtual worker autonomously proceeds a virtual operation utilizing the previously obtained rule information 4 and a task. More specifically, the virtual operation is proceeded utilizing the custom task 5 in which a basic task 6 as a task is combined.

As described above, the rule information 4 is a type of a usable welding machine for example. By utilizing the rule information 4 and tasks, it becomes easy for a virtual worker in the simulation to proceed a virtual operation reliably.

In this embodiment, after an interim result is supplied from the information supplying means 50 of the interim result supply step S4-5, a changing condition to which change is added from the user is received, and the time evolution system simulation is executed based on the changing condition. According to this, it is possible to precisely carry out simulation based on the changing condition on which intention of the user is reflected.

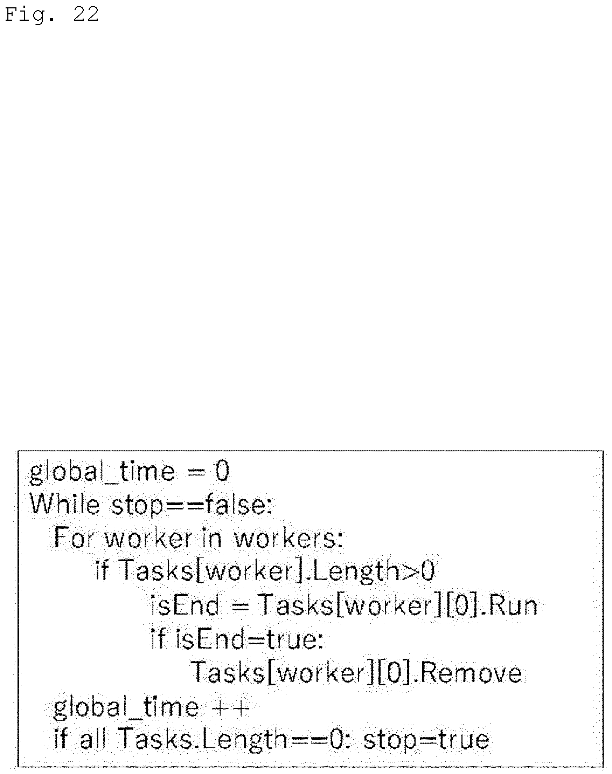

Fig. 22 is a diagram showing a pseudocode of a simulating step.

The basic task 6 constituting the custom task 5 expresses a small operation which can generally be used.

The basic task 6 is a function which can be executed on the time evolution system simulation, and before the time evolution system simulation is executed, the basic task 6 is constructed as a function. The basic task 6 is a basic function which is necessary for simulation in which an argument is given, an object of simulation related to the argument is moved or the object is occupied. The basic task 6 is a function in which three-dimensional constrained is taken into account.

The custom task 5 is constructed as a combination of the basic task 6. If a task includes a custom task 5 constructed by combining the basic task 6 which is a function executable in the time evolution system simulation, it is possible to enhance the precision of simulation by a custom task 5 in which small operations are combined by type of operations.

A concrete example of the basic task 6 is shown in the following table 11. Many basic tasks 6 exist in addition to that shown in table 11.

[Table 11]

| Task type | Function name | Arguments |
|---|---|---|
| | | (common): task name, task type, function name, objective, utilized facility, antecedent task, subjective name, required facility type and number of pieces |

(continued)

| | | |
|---|---|---|
| Carry At | AtPick | (Inherent): - |
| | AtPlace | (Inherent): reference object, coordinate value (x, y, z), and Euler angle ($\theta$, $\phi$, $\psi$) of carry destination |
| Tack welding Ft | Ft | (Inherent): - |
| Regular welding Wt | Wt | (Inherent): - |
| Backside heating Dt | Dt | (Inherent): - |

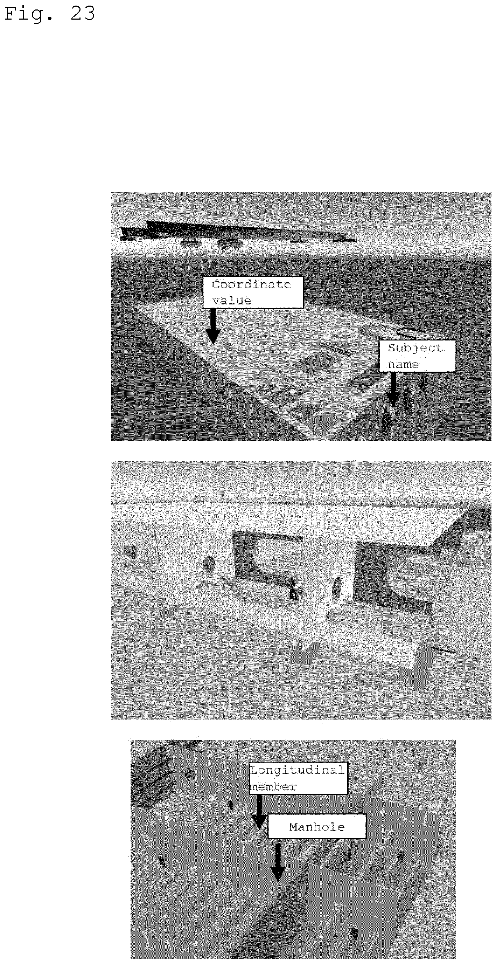

Fig. 23 is a diagram showing a moving task (move) as examples of the basic task. Definition of the moving task is as follows.

- It has as arguments a moving subject name and a coordinate value of a destination.
- On simulation, this becomes a function which moves a subject worker at specific speed.
- The shortest path is automatically calculated which taking three-dimensional land form into account.
- When an obstacle such as a manhole or a longitudinal member exists on the way to a path and it is necessary to go under, stride across or exceeds the obstacle, speed is reduced in accordance with such behavior.

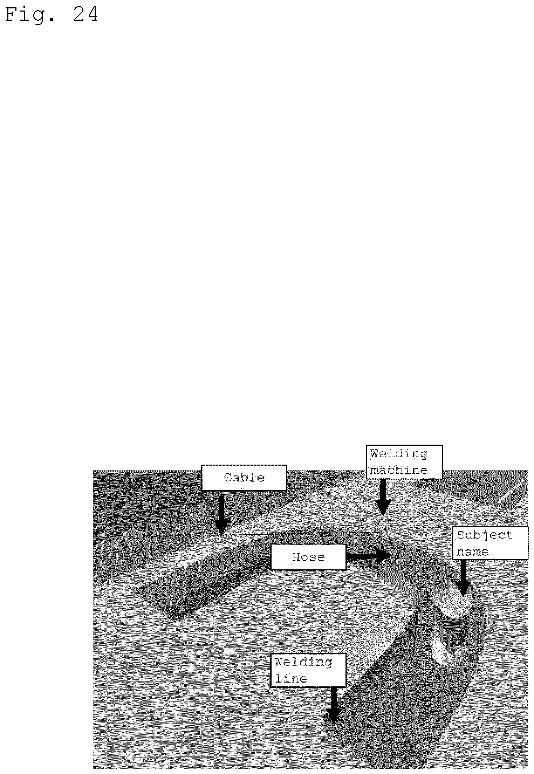

Fig. 24 is a diagram showing a welding task (weld) as examples of the basic task. Definition of the welding task is as follows.

- The arguments are a subject name, a welding line name of objective, and a welding machine name to be utilized.
- On the simulation, it is a function which moving a torch near the welding line at specific welding speed.
- A power source cable, a torch and a hose are replicated in the welding machine, and the cable and the hose interfere with another object.
- When the welding line is overhead and when the welding line is flat, the welding speed is changed.

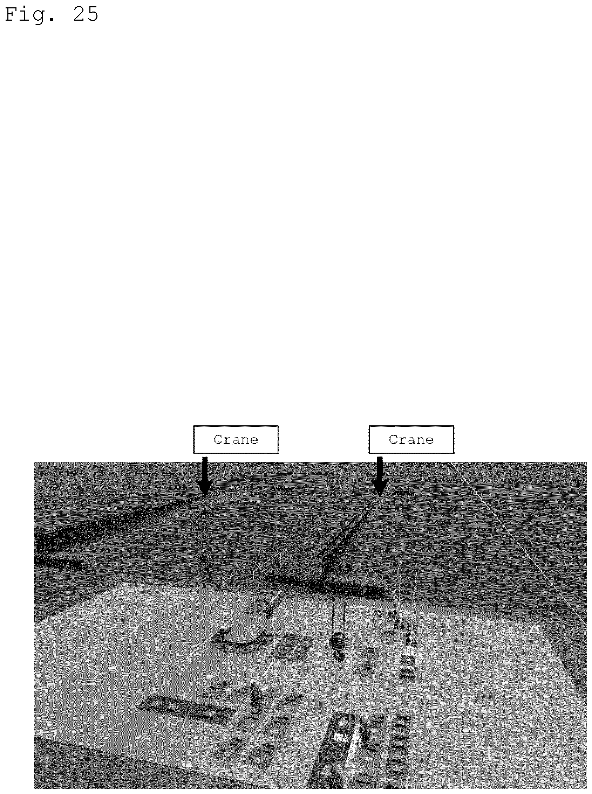

Fig. 25 is a diagram showing a crane moving task (CraneMove) as examples of the basic task. Definition of the crane moving task is as follows.

- The arguments are a subject name and a coordinate value of a destination.
- On the simulation, it becomes a function which moves to a destination at specific moving speed.
- In this basic task 6, a subject worker becomes an equipment (crane). Concerning the equipment, a style in which a task is instructed from outside and the task is executed is employed.
- Interference determination with another crane is carried out, and a region where the crane can move is taken into account as constraint.

Here, a custom task 5 which is previously defined as a method before task executing step S4-2 will be described in detail. The custom task 5 is defined as follows.

- The custom task 5 is constructed as a combination of the basic task 6, aggregation of a series of continuous patterned or conventionalized is expressed as one custom task 5. For example, when the custom task 5 is a carry task, "move to object -> grasp object -> move together with object -> place object" is established.
- An argument is given to the custom task 5, basic tasks 6 in a predetermined order are previously constructed based on the argument, and a list of the basic tasks 6 is constructed finally.
- The custom tasks 5 are constructed on a task-by-task basis which are desired to be reproduced such as a carry task, a tack welding task and a welding task.
- The custom task 5 includes a common argument as input and an argument which is inherent to each task.
- As the custom tasks 5, there are one having a person as a subject and one having an equipment as a main body. For example, a subject of a carry task is a person (worker), and a subject of an automatic welding task is an equipment (automatic welding machine).

Examples of a task type, a function name and an argument of a custom task 5 allocated to a person are shown in the following table 12, and examples of a function name and an argument of a custom task 5 allocated to a device are shown in the following table 13.

[Table 12]

| Task type | Function name | Arguments |
|---|---|---|
| | | (common): task name, task type, function name, objective, utilized facility, antecedent task, subject name, required facility type and number of pieces |
| Carry At | AtPick | (Inherent): - |
| | AtPlace | (Inherent): reference object, coordinate value (x, y, z), and Euler angle (θ, ϕ, ψ) of carry destination |
| Tack welding Ft | Ft | (Inherent): - |
| Regular welding Wt | Wt | (Inherent): - |
| Backside heating Dt | Dt | (Inherent): - |

[Table 13]

| Function name | Argument |
|---|---|
| | (common): task name, task type, function name, objective, utilized facility, antecedent task, subject name, required facility type and number of pieces |
| CraneRun | (Inherent): - |
| CraneHoist | (Inherent): - |
| AutoWeldRun | (Inherent): - |

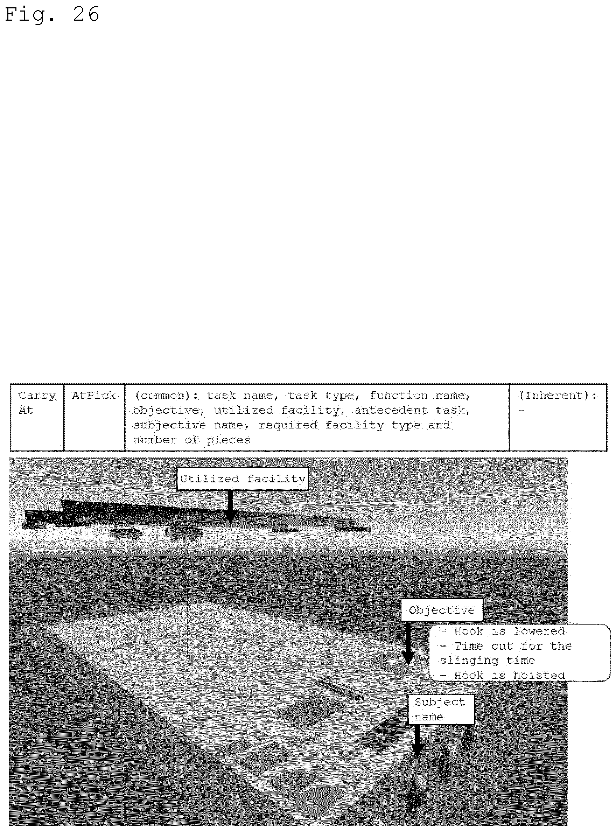

Fig. 26 is a diagram showing examples of carry task "go to receive" as a custom task. A hoist crane is used.

A task type of this carry task is "carry At", a function name is "AtPick", a common argument is "task name, task type, function name, objective, utilized facility, antecedent task, subject name, required facility type and the number of pieces", and there is no inherent argument. Examples of a list of the basic task 6 constituting the carry task "go to receive" are shown below.

1. move (subject worker, place of facility)
2. move (subject worker and facility, place of objective)
3. CraneHoist (down)
4. Timeout (designated seconds)
5. CraneHoist (up)

The No. 3 basic task 6 lowers a hook, the No. 4 basic task 6 keeps the hoist crane waiting for the slinging time, and the No. 5 basic task 6 hoists the hook.

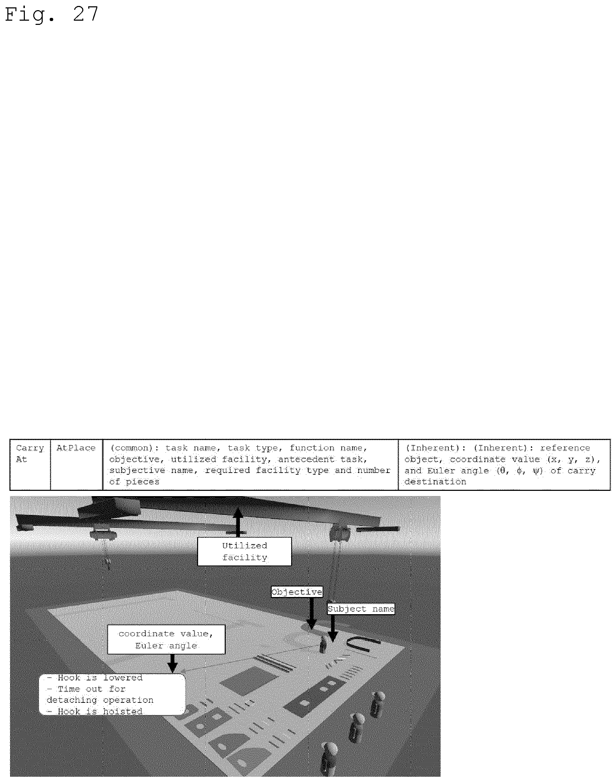

Fig. 27 is a diagram showing examples of carry task "locating" as a custom task.

A task type of this carry task is "carry At", a function name is "AtPlace", a common argument is "task name, task type, function name, objective, utilized facility, antecedent task, subject name, required facility type and the number of pieces", and an inherent argument is "reference object, coordinate value (x, y, z) and Euler angle (θ, ϕ, ψ)" of carry destination.

Examples of a list of the basic task 6 constituting the carry task "locating" are shown below.

1. move (subject worker, facility and objective, to designated coordinate value)
2. CraneHoist (down)
3. Timeout (designated seconds)
4. GraneHoist (up)

The No. 3 basic task 6 keeps the hoist crane waiting for time required for detach object.

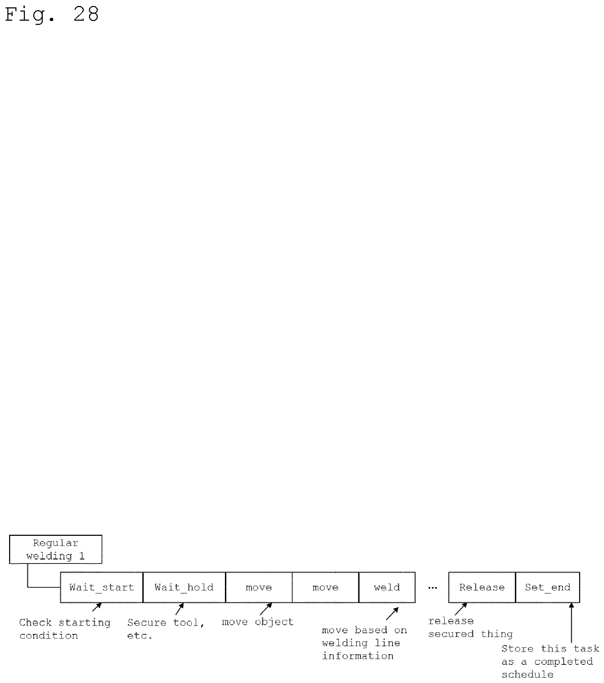

Fig. 28 is a diagram showing examples expressing a welding task which is one of custom tasks by means of a combination of the basic tasks. By executing a task as a method, variables $x_f$, $x_p$ and st are varied. Hence, methods are defined for each of the custom tasks 5, but the custom tasks 5 are expressed by a combination of the basic tasks 6 which are further small methods.

First, the basic task 6 (Wait_start) which confirms a starting condition becomes a method to wait until the condition is satisfied.

The basic task 6 (Wait_hold) for securing a tool becomes a basic method in which if all of tools to be used are not available, the procedure must be waited, and if the tools are available, the state is shifted the tools are occupied for the welding task.

Expression such as to move a component part by a crane is expressed as a moving task (move), and a position and an angle are changed at designated speed.

The welding task (weld) is a method in which based on welding line information defined in the product model, a welding torch and a worker are moved at speed based on moment to a welding starting point and a welding attitude, and the component part is changed to a next intermediate part. Various tasks are expressed by the combination of such basic tasks 6, and the various tasks are constructed as methods previously (before task executing step S4-2).

In this manner, the custom task 5 describes predetermined standard procedure. The custom task 5 is created like a catalogue before the simulating step S4. One example of the custom task 5 is as follows.

Temporary welding (custom task 5): go to receive a welding machine + go to receive a crane + hang a part + align a position + temporary joint.

At that time, which tool should be selected (welding machine 1 or welding machine 2, etc.) is determined based on the rule information 4 (rule 1A, rule 2A, rule 2, etc.). Concerning the rule 3 of the rule information 4, when a magnetic type crane is used, a new task that the tool is placed on a wagon after it is used is generated. Of course, it is also possible for a user to designate a tool to be used not based on the rule information 4.

Concerning movement also in the basic task 6, it is estimated that it is difficult to manually input a moving path in all of tasks in many cases. Therefore, it is preferable that it is set such that a computer searches a path and automatically determines. In this case, more specifically, a movable region is dynamically produced by mesh, an apex and a line segment are of the mesh recognized, and the path is automatically calculated by A* algorithm.

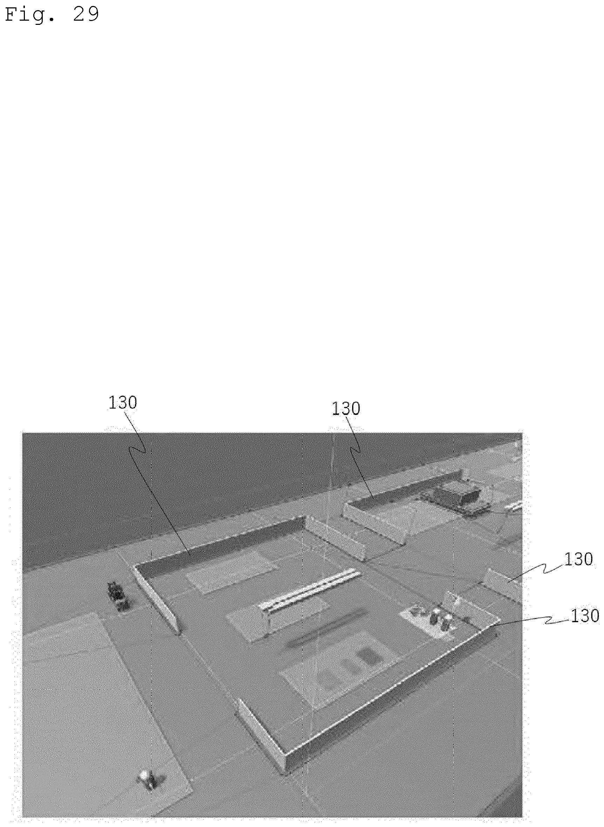

Fig. 29 is a diagram showing examples constituting a movable mesh among a region surrounding by a wall having two entrances. Since a mesh does not exists near a wall 130, a path which moves to bypass the wall 130 is produced. In an actual mounting operation, NavmeshAgent class of Unity (registered trademark) is utilized for example. According to this, a point of a destination or an object of the destination is designated in the basic task 6, a halfway path can largely delete labor of input which is automatically calculated.

Here, a specific example of input data which is input in simulation is shown in the following table 14. Data concerning facility is excluded.

[Table 14]

| No | Data name | Simple explanation | Sample place (input sample) |
|---|---|---|---|
| 1 | Shape data | Shape data of each of parts, in sample, obj format. | SUB_F/Original Data/ *.obj |
| 2 | Welding line data | Data showing polyline of welding line and line in torch direction, in sample, txt format. | SUB_F/WeldingL ine/ Line*/weld _0.txt |
| 3 | Backside heating line data | Data pf line requiring backside heating like welding line, in sample, txt format. | SUB_F/HeatingL ine/ Line*/heat _0.txt |
| 4 | Product model data | Data showing relation between parts and connection relation. | Product.csv |
| 5 | Polyline data | Data showing relation between backside heating line and product. | Polyline.csv |
| 6 | Assembling tree data | Assembling hierarchy of part, data of position and direction of base plate in the hierarchy in local coordinate system. | Assenblytree.c sv |
| 7 | Task tree data | Data showing list of tasks required until product is assembled, parameter, and anteroposterior relation. Partly, blank space is automatically determined in simulation. | Tasktree.csv |

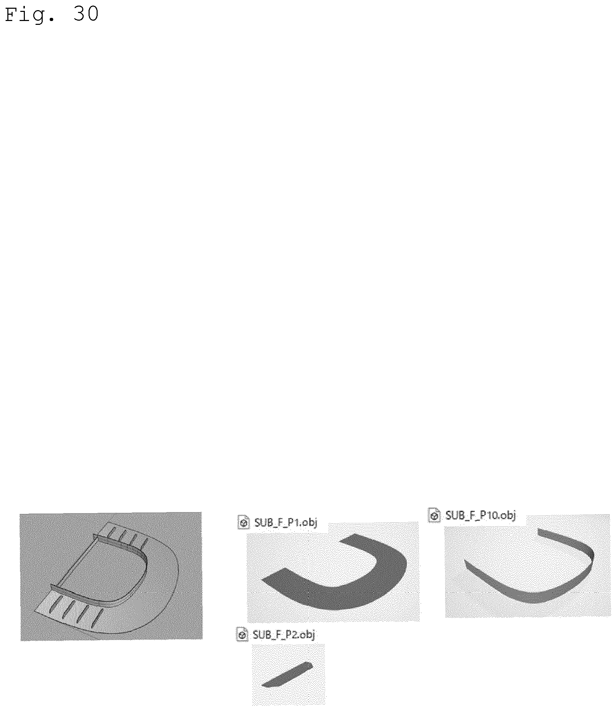

Fig. 30 is a diagram showing examples of shape data.

It is assumed that a sample shown in Fig. 30 is a small set of a name SUB_F. All of parts is defined with a local coordinate system per a part and with stable attitude. Although a solid model is indicated, other data format can also be employed.

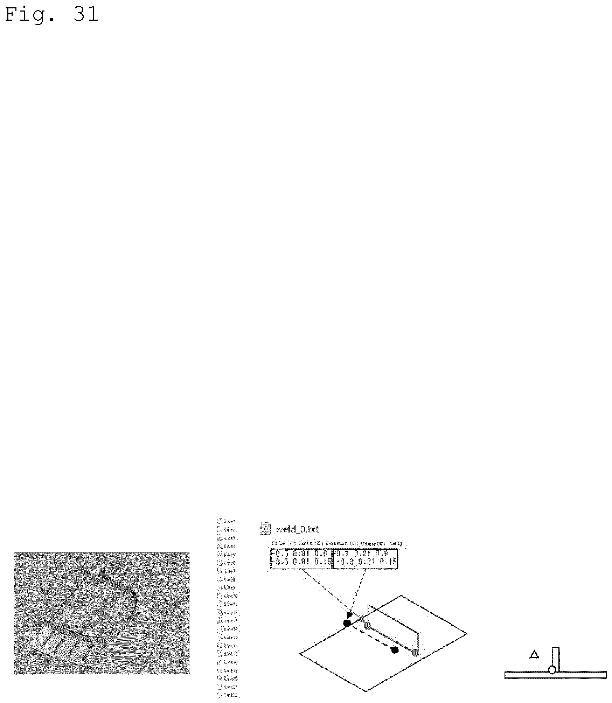

Fig. 31 is a diagram showing examples of welding line data.

The welding line data is defined for each of welding lines, a polyline of the welding line is in a completed coordinate system. In the central drawing, a solid line shows the welding line, and a dotted line is a welding line drawn in an opposite direction of torch contact. The right drawing is a side view, "○" shows a position of the welding line, and "△" shows a position of the welding line drawn in an opposite direction of torch contact.

As described above, in this embodiment, it is defined that welding speed is changed when the welding line is overhead and when the welding line is flat, but it is also possible that data concerning actual welding speed is previously obtained, and the welding speed is changed based on the data.

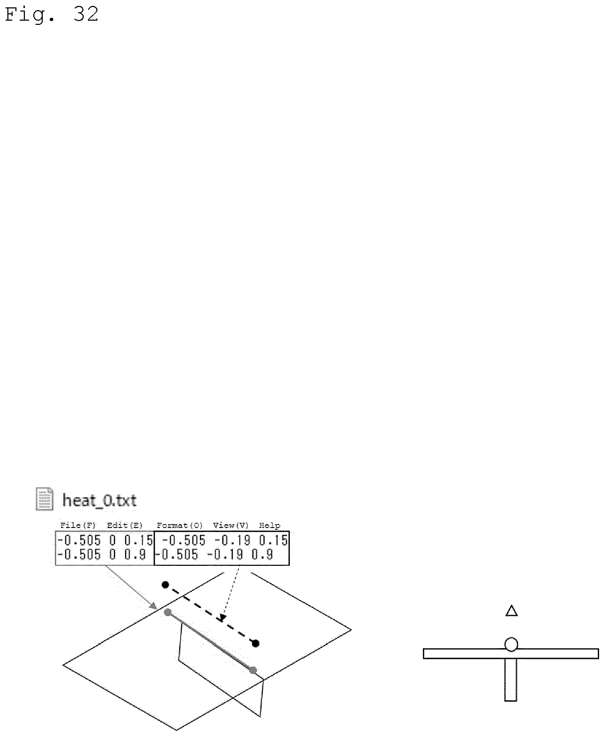

Fig. 32 is a diagram showing examples of backside heating line data.

Here, for the purpose of eliminating strain, it is assumed that fire is struck to a back side of a bone at a small set stage by means of a gas burner. The polyline of the backside heating line is in the completed state coordinate system. In the left drawing, a solid line shows the backside heating line, and a dotted line is a backside heating line drawn in a direction opposite from orientation of the gas burner. The right drawing is a side view, "○" shows a position of the backside heating line, and "△"shows a position of the backside heating line drawn in a direction opposite from the orientation of the gas burner.

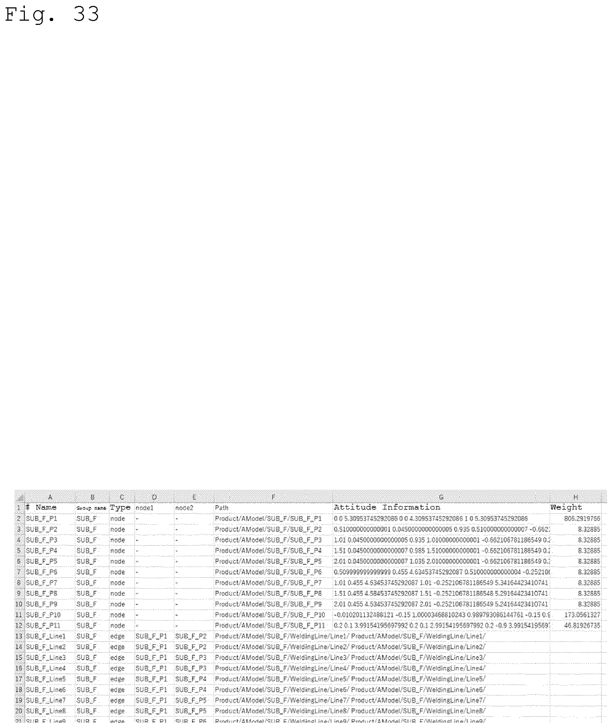

Fig. 33 is a diagram showing examples of product model data.

Column A shows that a title is "name", and names of a part and a welding line are described. Column B shows that a title is a "group name", and a group name which belongs is described. Column C shows that a title is "type", "node" is described if it is a part, and "edge" is described if it is a line. Columns D and E show that a title is "node", and information of a line connecting which part to which part is described. Column F shows a title is "Path", and a path showing a storage location of shape data and welding line data is described. Column G shows that a title is "attitude information", and a relative position and an angle of parts in the completed state are described. Column H shows that a title is "weight", and weight of a part is described.

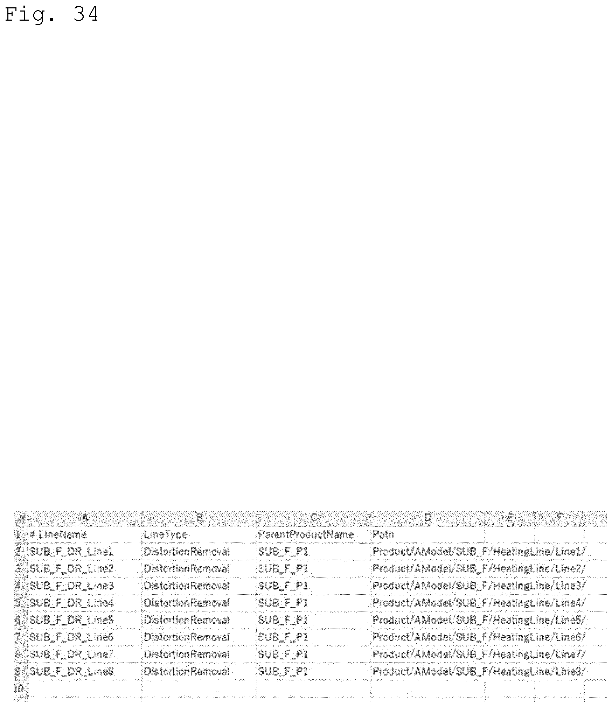

Fig. 34 is a diagram showing examples of polyline data.

Column A shows that a title is "LineName", and a backside heating line name is described. Column B shows that a title is "LineType", and a line type is described. Column C shows that a title is "ParentProductName", and information as to which product (parent product) is reference is described. Column D shows that a title is "Path", and path showing a storage location of the backside heating line data is described.

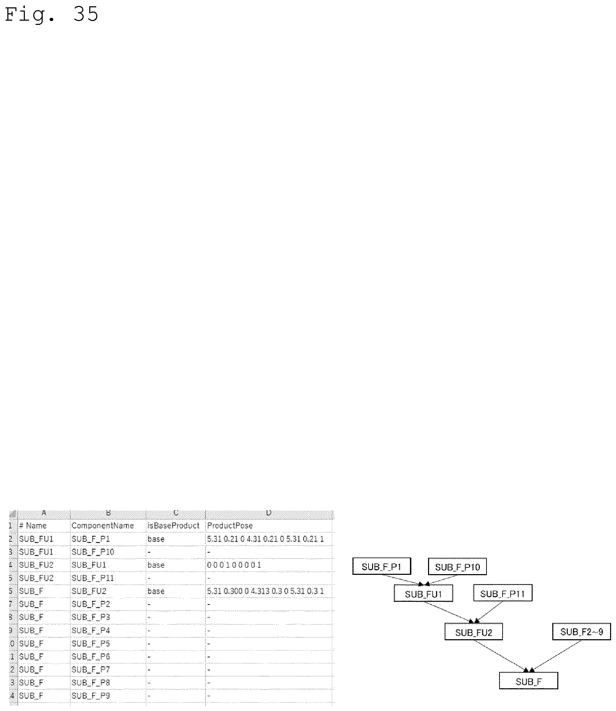

Fig. 35 is a diagram showing examples of assembling tree data.

In the left diagram, column A shows that a title is "Name", and a name of an intermediate part is described. Column B shows that a title is "ComponentName", and a name of member constituting the intermediate part is described. Column C shows that a title is "isBasedProduct", and if it is a base plate, "base" is described. Column D shows that a title is "ProductPose", and if it is a base plate, a position and an angle of the base plate in a local coordinate system of the intermediate part is described.

The right diagram shows examples of the assembling tree of the plate model.

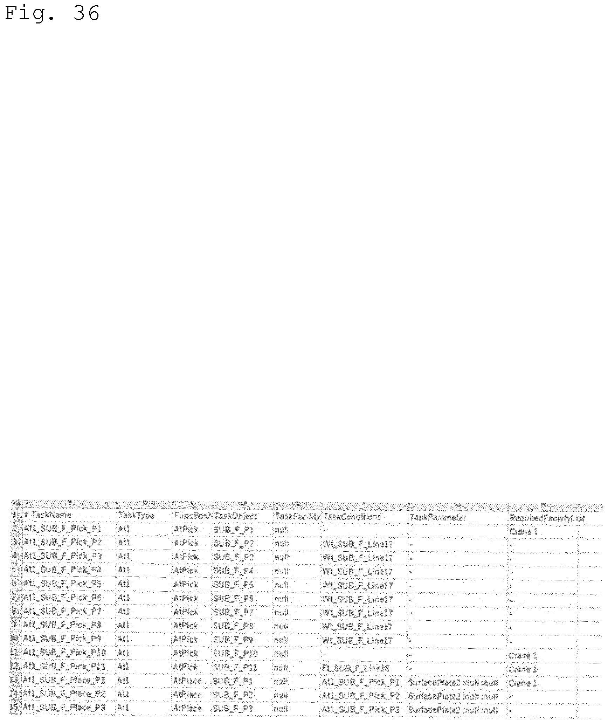

Fig. 36 is a diagram showing examples of task tree data.

Column A shows that a title is "TaskName", and a name of a task is described. Column B shows that a title is "TaskType", and type of a task is described. Column C shows that a title is "FunctionName", and a name in simulation is described. An argument required for each of tasks is described in columns D to G. Column H shows that a title is "RequiredFacilityList", and necessary facility is described.

Examples of types of a task described in column B are At1 (carry), Ft (tack welding), Wt (regular welding), Tt (reverse), Dt (backside heating), and At2 or At3 (movement of product).

In the columns D to G where arguments required for the respective tasks are described, the title of the column D is "TaskObject" and an objective is described. The title of the column E is "TaskFacility" and a utilized facility name is described. The title of the column F is "TaskCnditions", and antecedent task is described. The title of the column G is "TaskParameter", and a parameter which is inherent to a task is described. Although "null" is described in the column of task condition of the column F, this is automatically determined in simulation.

Description of column H shows the necessary number of specific type of tools, and if there is not sufficient number of tools, that operation cannot be carried out. For example, "Crane 1" in the Fig. 36 shows that if one crane does not exist, that operation cannot be carried out.

Referring back to Fig. 1, after the simulating step S4, the building simulating means 40 makes a result of the time evolution system simulation into time series data, and makes the same as building time series information 42 (time series informatization step S5). The time series data is time history data such as a position, an angle and occupation status of each facility including a worker which is action subjects. By executing the product model creating step S1, the facility model creating step S2, the process model creating step S3, the simulating step S4 and the time series informatization step S5 in this manner, a user can simulate the building of a ship at a detailed operation level, and it is possible to improve a factory, improve production design, forecast costs when order is received, and consider investment of equipment, based on the building time series information 42 as a result of the precise simulation. Therefore, it is possible to reduce building cost, and shorten a building period.

Further, since the building time series information 42 exists to an extremely detailed operation level, information is transmitted to a worker such that checking can visually be carried out utilizing a portable terminal such as a tablet, AR (Augmented Reality) technique, MR (Mixed Reality) technique or hologram display, or such that checking in full scale in a virtual space utilizing VR (Virtual Reality) can be carried out, thereby enhancing the operation efficiency. It is also possible to guide the operation by sound such as AI chatbot or the like.

After the time series informatization step S5, the building time series information 42 is output (outputting step S6). The information supplying means 50 provides a user with a result of the time evolution system simulation as the building time series information 42. A user can commonly have the obtained building time series information 42 in a cross-sectoral manner at related places by a worker, a designer, a manager and the like utilizing a cloud server. When the user watches the obtained building time series information 42 and feels the necessity to correct a condition of simulation, if only slight change is required, it is possible to operate the shipbuilding simulation system through the cloud server from on-the-spot.

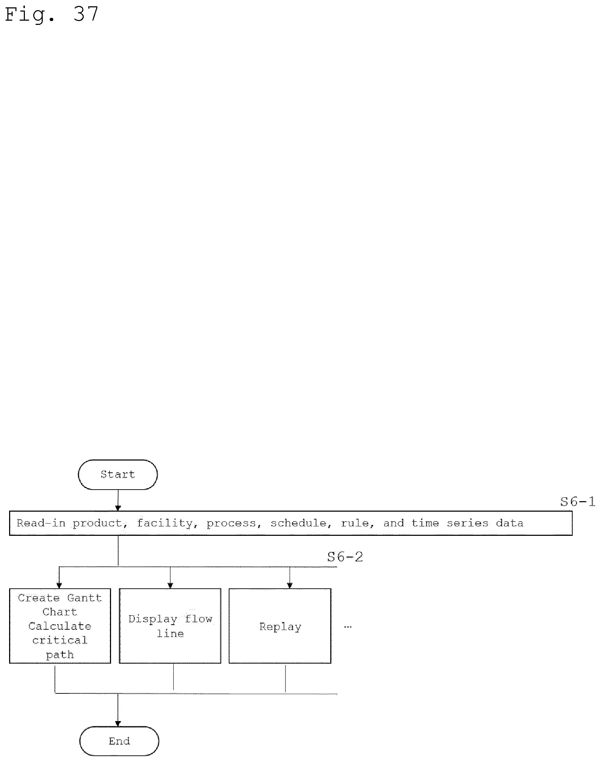

Here, Fig. 37 is a detailed flowchart of outputting processing.

First, the product model, the facility model, the process model, the schedule information 2, the rule information 4 and the building time series information 42 are read (output information reading step S6-1).

Next, calculation or creation required for display is carried out, and the building time series information 42 is displayed (display step S6-2). It is preferable that the building time series information 42 includes at least one of a Gantt chart, a work breakdown structure, an operation procedure manual, man-hour and a flow line. By carrying out such visualization, the user watches the building time series information 42 as a result of simulation, and he or she can obtain knowledge which is useful for building such as change in a component part or a facility, analysis and interpretation of a bottleneck and forecasting of man-hour. Concerning the work breakdown structure, it is possible to describe starting time and completion time of each task from the time series information. Therefore, although it is not direct, the work breakdown structure can be handled as the building time series information 42. The man-hour is for example, the number of days required for each operation, expressed as "** may day". Further, the building time series information 42 can also be expressed as a PERT diagram. The work breakdown structure, the operation procedure manual, the man-hour and the flow line can also be expressed as time series information.

As shown in Fig. 1, the model changing instructing means 60 determines whether or not a result of the building time series information 42 which is output in the outputting step S6 exceeds an expected target range (determining step S7), and if the result exceeds the expected target range such as a predetermined time range, instructions to change at least one of the facility model and the process model within a corresponding range. The building simulating means 40 repeatedly executes the process model creating step S3, the simulating step S4 and the time series informatization step S5 using the changed facility model or process model.

According to this, it is possible to obtain a simulation result in which building of a ship is completed within predetermined time. The corresponding range means a range of facility which already exists in a factory or a range of facility which can be achieved within several days. Introduction of equipment which requires the number of days, or employment of worker are not included. As an expected target, predetermined time or the like is set for example, but the intended target is not limited to this, and equalization of operation (operation load can be dispersed), securing of safety of an operation place, and existence or non-existence of dangerousness can be included.

The above-described steps can be executed by computer by means of a program which simulates building of a designed ship.

In this case, the program makes the computer receive input of the product model created in the process model product model creating step S1, and input of the facility model created in the facility model creating step S2, and executes a product model obtaining step of obtaining the created product model, a facility model obtaining step of creating the facility model, the process model creating step S3, the simulating step S4, and the time series informatization step S5, and further executes the outputting step S6. According to this, it is possible to simulate the building of a ship at a detailed operation level, and a user can improve a factory, improve production design, forecast costs when order is received, and consider investment of equipment, based on the building time series information 42 which is output as the precise simulation result. Therefore, it is possible to reduce building cost, and shorten a building period.

The program further causes the computer to the determining step S7. According to this, it is possible to obtain a simulation result in which the building of a ship can be completed within predetermined time.

Further, the program causes the computer to display an image of at least one of a calculation result and interim passage in the process model creating step S3, the simulating step S4 and the outputting step S6. According to this, it becomes easy for a user to understand the simulation result through what type of process, and visually check and understand interim process of simulation.

The computer is made to further execute the interim passage supply step S4-5, and the computer is made to receive the input by the user in the simulating step S4. According to this, it becomes easy to carry out simulation suited to the intension of the user.

Next, a shipbuilding simulation system according to another embodiment will be described. The same symbols are allocated to members having the same functions as those of the above-described embodiment, and description thereof will be omitted.

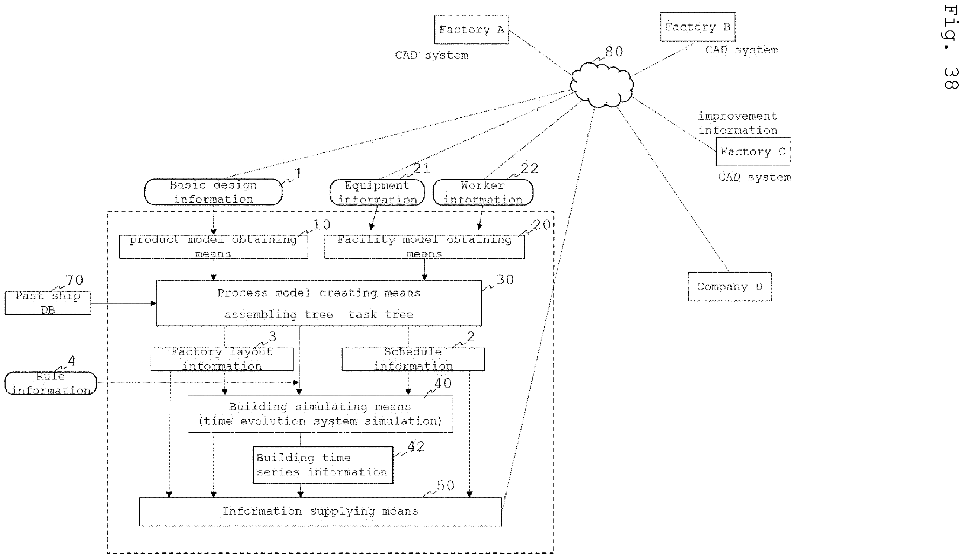

Fig. 38 is a block diagram expressing the shipbuilding simulation system according to the other embodiment by means of functional realizing means.

The shipbuilding simulation system according to this embodiment is connected to a factory A, a factory B, a factory C and a company D located at places different from the building simulation system through an information communication line 80. The company D is not a factory, but is a company which sums up the factories, a company which coordinates for building a ship communally, a company which specializes in basic design of a ship, or a company which certificates producing action.

The product model obtaining means 10 obtains a product model which is created based on the basic design information 1 of a ship. More specifically, basic design information 1 designed in any of the factory A, the factory B, the factory C and the company D is obtained through the information communication line 80, and when a coupling relation of a completed part and a component part composing the completed part is clear as the basic design information 1, a person determines a role, assignation and the like of the construction, and a product model of each factory is created. When the coupling relation of the component part is not clear, the coupling relation is made clear using the building simulation system itself or coupling relation clearing means based on the basic design information 1, the role and the assignation of the building are determined, and the product model is created. The product model obtaining means 10 obtains the product model which is created in this manner.

The facility model obtaining means 20 obtains a facility model of each of the factories created based on equipment information 21 and worker information 22 of each of the factory A, the factory B and the factory C. More specifically, a person abstracts it using assisting means based on the equipment information 21 and the worker information 22 from the factory A, the factory B and the factory C through the information communication line 80, and a facility model is created as a systematized data group which can be handled by simulation. The facility model obtaining means 20 obtains the facility model which is created in this manner.

The process model creating means 30 forms a process model for each of the factories based on the obtained product model and the facility model, and the building simulating means 40 carries out the time evolution system simulation of each off the factories for the product model.

According to this, a process model for each of the factories is formed from one product model, and simulation using the facility model for each of the factories is carried out. Therefore, it is possible to compare the producing cost and the building period between the factories, the building cost is further reduced and the building period is further shortened. Further, when order of construction of a single or a plurality of ships is received communally for example, it is also possible to forecast the cost and consider the investment of equipment when a plurality of factories communally construct the ship. For example, by sharing jobs with factories, a simulation result can be used for considering a chance of reception of order, e.g., for considering how many orders of ships can be received annually, and for considering the most efficient and beneficial way to allocate which block to which factories. Further, when a certain company order outsources a certain block, it is possible that simulation is carried out using a facility model of an outsource candidate company, and cost and building period are considered based on a result of the simulation.

The same company may have all of the plurality of factories or different companies may have the factories, respectively. It is also possible that the shipbuilding simulation system has a function to monitor and manage the plurality of factories remotely.

A result of time evolution system simulation of each of the factories in the building simulating means 40 is supplied from the information supplying means 50 to a user in a state where they can be compared with each other.

According to this, the user can swiftly and reliably compare the production costs and the building periods between factories.

The product model obtaining means 10 obtains the basic design information 1 of a ship from any of a CAD system or a plurality of CAD systems of the factories through the information communication line 80. The information supplying means 50 supplies the building time series information 42 to the factories and the company D through the information communication line 80. The information supplying means 50 can supply together not only the building time series information 42 but also the basic design information 1 used for the time evolution system simulation, the facility information and all other information.

According to this, even when the shipbuilding simulation system exists at a distant location, it is possible to swiftly obtain the basic design information 1 and supply the building time series information 42 through the information communication line 80.

Since the basic design information 1 of a ship is obtained from the CAD system, the basic design information 1 of the ship created by the CAD system can easily and effectively utilized for creating a product model. Although the CAD systems are placed in the factory A, the factory B and the factory C, it is possible to design in representing in one factory or to share and design the CAD systems with a plurality of factories. The CAD system may be placed only in the representative factory.

The facility model obtaining means 20 can obtain at least one of the equipment information 21 and the worker information 22 as improvement information of the factory. According to this, the building simulating means 40 can carry out the time evolution system simulation based on the improvement information of a factory, and the information supplying means 50 can supply the building time series information 42 based on the improvement information.

The improvement information of a factory is renewal or enhancement of ability of a crane, or increase in workers for example. By obtaining and using the improvement information of a factory, it is possible to carry out simulation when equipment and a worker of a factory are changed and improved.

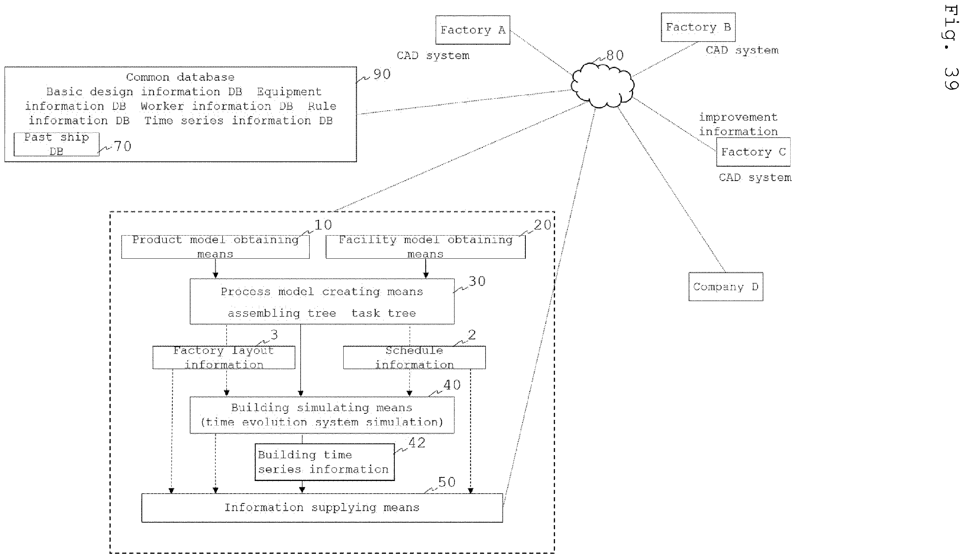

Next, a building simulation system of a ship according to further another embodiment will be described. The same symbols are allocated to members having the same functions as those of the above-described embodiment, and description thereof will be omitted. Fig. 39 is a block diagram expressing the shipbuilding simulation system according to this embodiment by means of functional realizing means.

The shipbuilding simulation system of this embodiment further includes a common database 90 concerning the building of the ship. The common database 90 includes a basic design information database, an equipment information database, a worker information database, a rule information database and a time series information database.

The product model obtaining means 10 obtains the basic design information 1 from the common database 90. The facility model obtaining means 20 obtains, from the common database 90, a facility model related to equipment and a worker concerning building of a ship created based on the equipment information 21 and the worker information 22. The process model creating means 30 obtains process model relating information related to the process model from the common database 90. The building simulating means 40 obtains the rule information 4 from the common database 90. By obtaining various kinds of information from the common database 90 in this manner, it becomes easy to obtain the information as compared with a case where different database is provided for each kind of information, the information can commonly be utilized, and it is possible to unify the management databases.

The information supplying means 50 supplies the time series information to the common database 90. According to this, new time series information can be accumulated in the common database 90, the time series information can be utilized as past ship information at the time of subsequent simulation for example, and the time series information can be utilized for machine learning of the rule information 4.

The common database 90 also includes the past ship database 70. The past ship database 70 which supplies process data of the past ship is also included in the common database 90 as the process model relating information. According to this, process model relating information of a similar type ship can be obtained, and simulation can be omitted or made simple and easy.

The common database 90 may be a physically converged database or may be diversified database which coordinates through communication line. It is preferable that data which is accumulated as basic requirement for making database is based on a data structure which is standardized having common name or number.

Next, a shipbuilding simulation system according to further another embodiment will be described. The same symbols are allocated to members having the same functions as those of the above-described embodiment, and description thereof will be omitted.

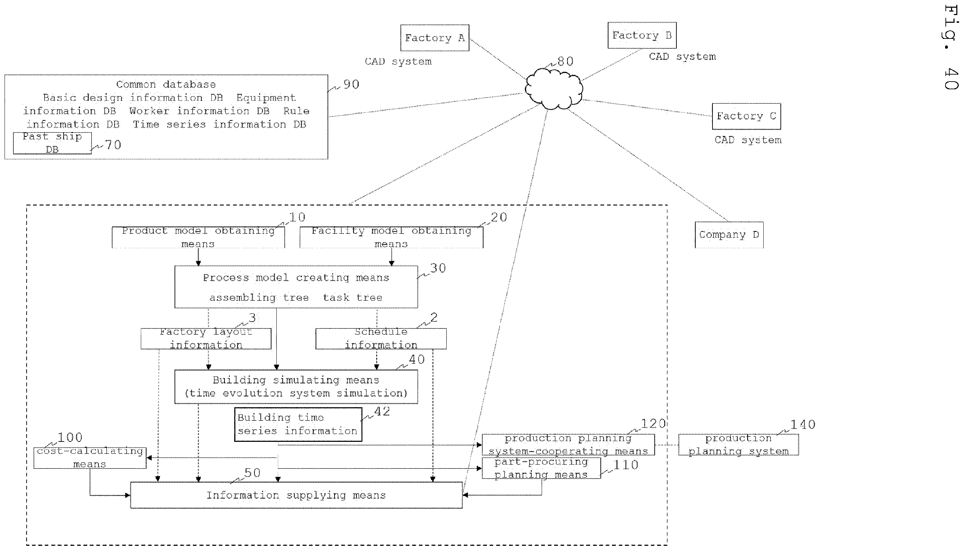

Fig. 40 is a block diagram expressing the shipbuilding simulation system according to this embodiment by means of functional realizing means.

The shipbuilding simulation system of this embodiment further includes cost-calculating means 100, part-procuring planning means 110 and production planning system-cooperating means 120.

The cost-calculating means 100 calculates cost related to building of a ship based on the building time series information 42. According to this, it is possible to easily obtain cost related to building of a ship calculated based on the building time series information 42. Further, by calculating based on the building time series information 42, it becomes easy to calculate the cost in more detail than the conventional methods such as a material cost of a jig, electric fee, a consumed amount of a welding wire and the like.

The part-procuring planning means 110 creates purchase plan of a purchase part which is necessary for building a ship based on the building time series information 42. According to this, it is possible to easily obtain the purchase plan of the purchased part created based on the building time series information 42.

The production planning system-cooperating means 120 coordinates with a production planning system 140 which gestates a production plan related to building of a ship based on the building time series information 42. According to this, the building time series information 42 can smoothly be connected to gestation of a production plan of the entire building of a ship. The production planning system 140 can utilize an existing production planning system or can be a production planning system which is developed to coordinate with the building simulation system.

[Examples]

An example in which a shipbuilding factory model is input data will be described. When moving sped of a worker, moving speed of a crane, and a set value of speed per unit length of a welding operation which are set for carrying out simulation are shown in the following table 15. Here, these values are set in a single uniform way, but the values can be defined per each of tasks (e.g., in accordance with welding attitude).

[Table 15]

| Attribution name | Set value |
|---|---|
| Moving speed of worker | 1.0m/s (when crane is utilized, speed is set equal to crane speed |
| Moving speed of crane | 0.5m/s |
| Speed per unit length of temporary welding operation | 0.2m/s |
| Speed per unit length of regular welding operation | 0.02m/s |

Essentially, temporary welding should be expressed by intermittent welding line like tack welding, but in this example, for simplification, a welding line path (polyline) which is utilized for regular welding is used in combination, and an operation difference is expressed by changing the welding speed per unit length. A welding operation in assembling scenario which is set in this example is only horizontal fillet welding, and overhead welding is not generated.

An OBJ type (Wavefront Technologies company) which is generic intermediate file format that can be imported to Unity (registered trademark) is employed as a 3D CAD model file.

(Case 1)

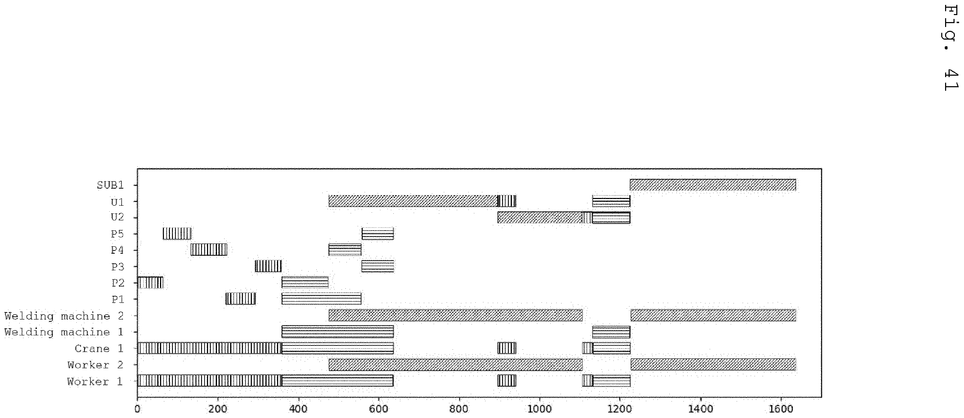

Fig. 41 is a Gantt chart of a calculation result of simulation in an assembling scenario of a case 1. Names of a vertical axis show facilities and products (completed parts, intermediate parts and component parts), and horizontal axis shows time (s). Lateral rods of the vertical line show carry task, lateral rods of the lateral line show temporary welding task, and lateral rods of the diagonal line show time occupied by regular welding task.

In the scenario of the case 1, an assembling operation is carried out for a five-plate model by total two workers, i.e., one ironworker and one welder. Schedules of the determined each worker is are as shown in table 7. A worker 1 on second line in table 7 is the ironworker, and a worker 2 on second line is the welder. The workers carry out tasks in the order described in table 7.

It can be found that time required for the carry of plates P1 to P5 shown by the lateral rods of the vertical line is about 370 seconds from Fig. 41 which is the Gantt chart calculated by the shipbuilding simulation system based on this scenario. This time corresponds to about 1/4 or less of the entire time. Time required for the carry cannot directly be calculated by a conventional method which calculates from a welding length, and this time corresponds to associated operation. Since the worker 2 cannot start the operation until the carry and the temporary welding task are completed, the worker 2 must wait for about 480 seconds. Thereafter, the worker 1 needs to wait for the task until the worker 2 completes the intermediate part U2, and the worker 2 executes the temporary welding task from about 1100 seconds.

Time required for each of the tasks which cannot be calculated by the conventional calculation method carried out by the shipbuilding simulation system is c calculated in this manner, and a manner in which waiting time is generated depending upon a progressing degree of the tasks is replicated.

(Case 2)

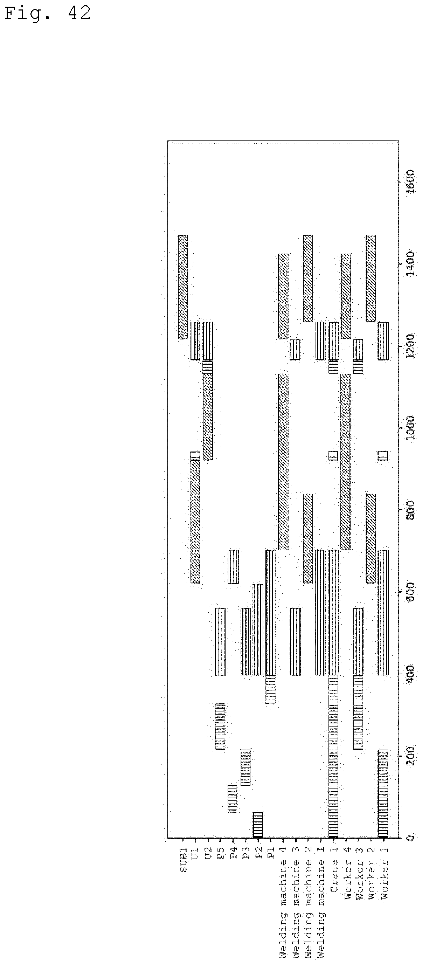

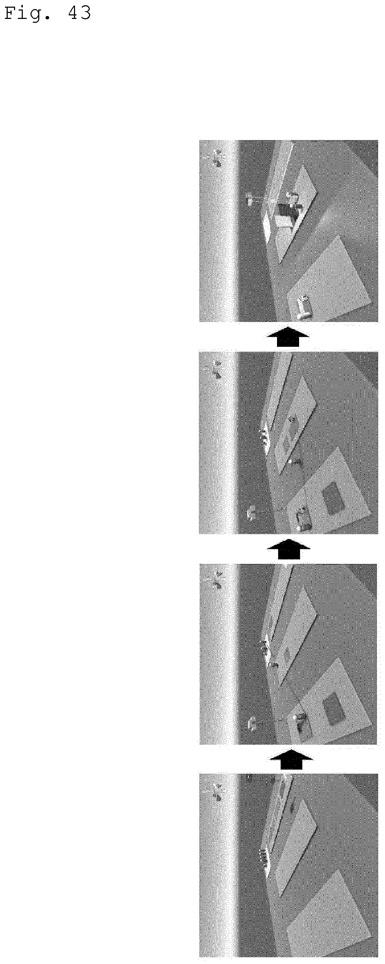

Fig. 42 is a Gantt chart of a calculation result of simulation in an assembling scenario of a case 2. Names of a vertical axis show facilities and products (completed parts, intermediate parts and component parts), and horizontal axis shows time (s). Lateral rods of the vertical line show carry task, lateral rods of the lateral line show temporary welding task, and lateral rods of the diagonal line show time occupied by regular welding task. Fig. 43 is a three-dimensional appearance diagram of simulation of the case 2.

In the case 2, the scenario in which the number of workers is increased to total four, i.e., two iron workers (workers 1, 3) and two welders (workers 2, 4) is set for an objective of a five-plate model like the case 1. Correspondingly, two welding machines are added. Schedules of each worker are as shown in the following table 16.

[Table 16]

| Person in charge | Task to be charged and execution order |
|---|---|
| worker 1 | Carry 0, carry 2, carry 4, temporary welding 0, temporary welding 1, carry 5, temporary welding 3 |
| worker 2 | Regular welding 0, regular welding 3 |
| worker 3 | Carry 3, carry 1, temporary welding 2, carry 6, temporary welding 4 |
| worker 4 | Regular welding 1, regular welding 2, regular welding 4 |

From Fig. 42 which is the Gantt chart calculated by the shipbuilding simulation system based on this scenario, it can be found that time required for the carry of the plates P1 to P5 is about 400 seconds, and the time is longer than that of the case 1. This is because that since the worker 1 and the worker 3 commonly use one crane, extra walking time is required. Concerning the temporary welding time also, since one crane is commonly used, it becomes longer than the case 1. During the regular welding between the intermediate part U1 and the completed part SUB1, since two workers respectively carry out two welding lines in parallel, time is shortened as compared with the case 1. On the other hand, concerning the total building period from the beginning to the end, the number of workers is made two times as compared with the case 1, but the total building period does not become half, and a difference thereof as a result is only about 150 seconds caused by reduction in the regular welding time of the intermediate part U1 and the completed part SUB1.

In this manner, it becomes possible to consider details that cannot be considered under the conventional concept of efficiency, and the quantitative difference and its basis become clear.

As shown in Fig. 43, it is also possible to directly check the manner in which a position of a three-dimensional object of each of the models is changed.

Although the preferable embodiments and examples of the present invention have been described above, the invention is not limited to them, the invention can variously be changed and carried out within scopes of claims, detailed description of the invention and the accompanying drawings, and they belong to the scope of the invention of course.

[INDUSTRIAL APPLICABILITY]

According to the present invention, it is possible to precisely simulate building of a ship which requires determination of detailed operations in accordance with a status in which flow of an object at the time of production and motion of a worker are not formulaic, and a result thereof can be utilized in a wide range concerning building such as forecast of cost, production design, gestation and improvement of building schedule plan, investment of equipment, analysis of production field and clarification of bottleneck. Further, the invention can be developed to other products such as a floating body in which similar analogy is established, offshore wind power generation equipment, underwater sailing body and a marine structural object, and other industries such as construction industry. When the invention is applied to them, it is possible to replace a ship in claims with words in other products and other industries, and interpret the words.

[EXPOANATION OF SYMBOLS]

1 basic design information
2 schedule information
3 factory layout information
4 rule information
5 custom task
6 basic task
10 product model obtaining means
20 facility model obtaining means
21 equipment information
22 worker information
30 process model creating means
40 building simulating means
42 building time series information
50 information supplying means
60 model changing instructing means

S1 product model creating step
S2 facility model creating step
S3 process model creating step
S4 simulating step
S4-5 interim result supply step
S5 time series informatization step
S6 outputting step
S7 determining step

## Claims

**1.** A shipbuilding simulation method for simulating building of a designed ship, executing:

a product model creating step of creating a product model by obtaining basic design information in which a coupling relation between a completed part of the ship and a component part composing the completed part is clarified;
a facility model creating step of obtaining equipment information of a factory which builds the completed part and worker information, and creating a facility model concerning equipment and a worker concerning building of the completed part;
a process model creating step of clarifying assembling procedure and tasks to assemble the component part to build the completed part and creating a process model based on the product model and the facility model;
a simulating step to carry out time evolution system simulation which sequentially calculates a progress status of building hourly based on the process model; and
time series informatization step of time series digitizing a result of the time evolution system simulation into building time series information.

**2.** The shipbuilding simulation method according to claim 1, wherein the process model includes an assembling tree expressing dependence relation for assembling the component part as the completed part, the tasks required for assembling operation, and a task tree expressing dependence relation between the tasks.

**3.** The shipbuilding simulation method according to claim 1 or 2, wherein the tasks include a custom task constructed by combining basic tasks which are functions that can be executed by the time evolution system simulation.

**4.** The shipbuilding simulation method according to any one of claims 1 to 3, wherein in the process model creating step, at least one of schedule information of the worker or factory layout information concerning location of the equipment and the worker is created based on the assembling procedure and the tasks.

**5.** The shipbuilding simulation method according to claim 4 which depends on claim 2, wherein in the process model creating step, the assembling procedure including an intermediate part of the component part is defined as the assembling tree, the appropriate task in each of stages of the assembling procedure is defined, anteroposterior relation as the dependence relation of the tasks is defined as the task tree, it is defined whether or not the task is in an ability value range based on the facility model, and when the task is in the ability value range, the schedule information is created.

**6.** The shipbuilding simulation method according to claim 5, wherein when the task exceeds the ability value range, the definition of the intermediate part, the definition of the assembling tree, the definition of the task and the definition of the task tree are redefined.

**7.** The shipbuilding simulation method according to any one of claims 1 to 6, wherein when the process model is created, process data of a past ship which is built in the past is referred to, and the process data is diverted.

**8.** The shipbuilding simulation method according to any one of claims 1 to 7, wherein the time evolution system simulation in the simulating step sequentially calculates an hourly position of the completed part or the component part, positions and occupation statuses of the equipment and the worker, and the assembling procedure and the progress status of the task.

**9.** The shipbuilding simulation method according to any one of claims 1 to 8, wherein in the simulating step, when the worker autonomously proceeds a virtual operation utilizing previously obtained rule information and the task, Brains which is determination rule given to the worker is utilized as the rule information.

**10.** The shipbuilding simulation method according to any one of claims 1 to 9, further comprising a determining step for determining whether a result of the building time series information exceeds a predetermined time range, wherein the facility model is changed in a corresponding range, and the method repeatedly executes the process model creating step, the simulating step and the time series informatization step.

**11.** A shipbuilding simulation program for simulating building of a designed ship, the simulation program makes a computer executes:

the product model obtaining step of obtaining a product model created in the shipbuilding simulation method according to any one of claims 1 to 9;
the facility model obtaining step of obtaining a created facility model;
the process model creating step;
the simulating step; and
the time series informatization step, and wherein
an outputting step outputting the building time series information is executed.

**12.** The shipbuilding simulation program according to claim 11, wherein the simulation program further causes the computer to the determining step in the shipbuilding simulation method according to claim 10.

**13.** The shipbuilding simulation program according to claim 11 or 12, wherein the simulation program causes the computer to display an image of at least one of a calculation result and interim passage in the process model creating step, the simulating step and the outputting step.

**14.** A ship building simulation system of executing the shipbuilding simulation method according to any one of claims 1 to 10, comprising:

product model obtaining means of obtaining the product model;
facility model obtaining means of obtaining the facility model concerning the equipment and the worker related to building of the ship;
process model creating means of creating the process model in which the assembling procedure and the task for building the ship are clarified;
building simulating means of carrying out time evolution system simulation based on the process model; and
information supplying means of supplying a result of the time evolution system simulation as building time series information.

**15.** The shipbuilding simulation system according to any one of claims 1 to 14, further comprising model changing instructing means, wherein it is determined whether or not a result of the building time series information exceeds an expected target range, and if the result of the building time series information exceeds the expected target range, the model changing instructing means instructs to change at least one of the facility model and a process model within a corresponding range.

**16.** The shipbuilding simulation system according to claim 14 or 15, wherein the facility model obtaining means obtains the equipment information and the worker information of the plurality of factories, the process model creating means creates the process model of each of the factories, the building simulating means carries out the time evolution system simulation for each of the factories for the product model, and a result of the time evolution system simulation of each of the factories is supplied from the information supplying means in a comparable state.

**17.** The shipbuilding simulation system according to any one of claims 14 to 16, wherein the facility model obtaining means obtains at least one of the equipment information and the worker information as improvement information of the factory, the building simulating means carries out the time evolution system simulation based on the improvement information of the factory, and the information supplying means supplies the building time series information based on the improvement information.

**18.** The shipbuilding simulation system according to any one of claims 1 to 19, further comprising based on the building time series information, at least one of cost-calculating means of calculating cost concerning building of the ship, part-procuring planning means of creating a purchase plan of a purchased part which is required for building of the ship, and production planning system-cooperating means of coordinating with a production planning system which gestates a production plan related to building of the ship.

## Amended claims under Art. 19.1 PCT

**1.** A shipbuilding simulation method for simulating building of a designed ship, executing:

a product model creating step of creating a product model by obtaining basic design information in which a coupling relation between a completed part of the ship and a component part composing the completed part is clarified;
a facility model creating step of obtaining equipment information of a factory which builds the completed part and worker information, and creating a facility model concerning equipment and a worker concerning building of the completed part;
a process model creating step of clarifying assembling procedure and tasks to assemble the component part to build the completed part and creating a process model based on the product model and the facility model;
a simulating step to carry out time evolution system simulation which sequentially calculates a progress status of building hourly based on the process model; and
time series informatization step of time series digitizing a result of the time evolution system simulation into building time series information.

**2.** The shipbuilding simulation method according to claim 1, wherein the process model includes an assembling tree expressing dependence relation for assembling the component part as the completed part, the tasks required for assembling operation, and a task tree expressing dependence relation between the tasks.

**3.** The shipbuilding simulation method according to claim 1 or 2, wherein the tasks include a custom task constructed by combining basic tasks which are functions that can be executed by the time evolution system simulation.

**4.** The shipbuilding simulation method according to any one of claims 1 to 3, wherein in the process model creating step, at least one of schedule information of the worker or factory layout information concerning location of the equipment and the worker is created based on the assembling procedure and the tasks.

**5.** The shipbuilding simulation method according to claim 4 which depends on claim 2, wherein in the process model creating step, the assembling procedure including an intermediate part of the component part is defined as the assembling tree, the appropriate task in each of stages of the assembling procedure is defined, anteroposterior relation as the dependence relation of the tasks is defined as the task tree, it is defined whether or not the task is in an ability value range based on the facility model, and when the task is in the ability value range, the schedule information is created.

**6.** The shipbuilding simulation method according to claim 5, wherein when the task exceeds the ability value range, the definition of the intermediate part, the definition of the assembling tree, the definition of the task and the definition of the task tree are redefined.

**7.** The shipbuilding simulation method according to any one of claims 1 to 6, wherein when the process model is created, process data of a past ship which is built in the past is referred to, and the process data is diverted.

**8.** The shipbuilding simulation method according to any one of claims 1 to 7, wherein the time evolution system simulation in the simulating step sequentially calculates an hourly position of the completed part or the component part, positions and occupation statuses of the equipment and the worker, and the assembling procedure and the progress status of the task.

**9.** The shipbuilding simulation method according to any one of claims 1 to 8, wherein in the simulating step, when the worker autonomously proceeds a virtual operation utilizing previously obtained rule information and the task, Brains which is determination rule given to the worker is utilized as the rule information.

**10.** The shipbuilding simulation method according to any one of claims 1 to 9, further comprising a determining step for determining whether a result of the building time series information exceeds a predetermined time range, wherein the facility model is changed in a corresponding range, and the method repeatedly executes the process model creating step, the simulating step and the time series informatization step.

**11.** A shipbuilding simulation program for simulating building of a designed ship, the simulation program makes a computer executes:

the product model obtaining step of obtaining a product model created in the shipbuilding simulation method according to any one of claims 1 to 9;
the facility model obtaining step of obtaining a created facility model;
the process model creating step;
the simulating step; and
the time series informatization step, and wherein
an outputting step outputting the building time series information is executed.

**12.** The shipbuilding simulation program according to claim 11, wherein the simulation program further causes the computer to the determining step in the shipbuilding simulation method according to claim 10.

**13.** The shipbuilding simulation program according to claim 11 or 12, wherein the simulation program causes the computer to display an image of at least one of a calculation result and interim passage in the process model creating step, the simulating step and the outputting step.

**14.** (Amended) A shipbuilding simulation system of executing the shipbuilding simulation method according to any one of claims 1 to 10, comprising:

product model obtaining means of obtaining the product model;
facility model obtaining means of obtaining the facility model concerning the equipment and the worker related to building of the ship;
process model creating means of creating the process model in which the assembling procedure and the task for building the ship are clarified;
building simulating means of carrying out the time evolution system simulation based on the process model; and
information supplying means of supplying a result of the time evolution system simulation as building time series information.

**15.** (Amended) The shipbuilding simulation system according to claim 14, further comprising model changing instructing means, wherein it is determined whether or not a result of the building time series information exceeds an expected target range, and if the result of the building time series information exceeds the expected target range, the model changing instructing means instructs to change at least one of the facility model and the process model within a corresponding range.

**16.** The shipbuilding simulation system according to claim 14 or 15, wherein the facility model obtaining means obtains the equipment information and the worker information of the plurality of factories, the process model creating means creates the process model of each of the factories, the building simulating means carries out the time evolution system simulation for each of the factories for the product model, and a result of the time evolution system simulation of each of the factories is supplied from the information supplying means in a comparable state.

**17.** The shipbuilding simulation system according to any one of claims 14 to 16, wherein the facility model obtaining means obtains at least one of the equipment information and the worker information as improvement information of the factory, the building simulating means carries out the time evolution system simulation based on the improvement information of the factory, and the information supplying means supplies the building time series information based on the improvement information.

**18.** (Amended) The shipbuilding simulation system according to any one of claims 14 to 17, further comprising based on the building time series information, at least one of cost-calculating means of calculating cost concerning building of the ship, part-procuring planning means of creating a purchase plan of a purchased part which is required for building of the ship, and production planning system-cooperating means of coordinating with a production planning system which gestates a production plan related to building of the ship.

Fig. 1

P60702/WOEP
EP 21 869 468.5
Translation of PCT/JP2021/034408

CAD system
Basic design information
1
S1
Create product model
S2
Create facility model
Change limitation
S3
Create process model
Factory layout information
3
Schedule information
2
-Assembling tree
-Task tree
(Compose using custom task)
Custom task
5
Basic task
6
S3-6
Process data of past ship
S4
Time evolution system simulation
Virtual equipment
Virtual worker
Rule information
4
S4-5
Interim result supply
User
S5
Time series informatization
S6
Output
S7
Determine

Fig. 2

- Constituent element
P1P2P3 = P1+P2+P3
- Coupling information
line1 = P1 and P2, line2 = P2 and P3
Product model
product.csv
Facility model
facility.csv
- Ability value range information
- Worker
Maximum moving speed 1.5m/s
- Welding torch
Welding speed range (graph of A, V and speed)
- Crane
Maximum load: 5t, maximum moving speed 1.0 m/s
Process model
Process_assembly.csv + process_task.csv
- Assembling tree - Task tree
Schedule information
schedule.csv
- Allocation of worker to each task and task order
Factory layout information
layout.csv
- Location of product and facility
Previous check of reasonability of process model
Simulation execution
Output of simulation result (Gantt Chart, csv and the like)

Fig. 3

(a)
Simplify
Five-plate model
(b)
P1
P2
P3
P4
P5

Fig. 4

Node
P2
Edge
line1
Edge
line3
Node
P1
P3
line5
P5
Node
Edge
Node
line2
line4
Edge
Edge
P4
Node

Fig. 5

y
z
x
P1

Fig. 6

product.csv

| ID | name | parent | type | Node1 | Node2 | Data |
|---|---|---|---|---|---|---|
| p1 | P1 | P1P2P3 | Node | - | - | resources/P1.obj: Coordinate conversion information in completed shape (Three-points data, vo, vx, vz), weight, ... |
| p2 | P2 | P1P2P3 | Node | - | - | resources/P2.obj: Coordinate conversion information in completed shape (Three-points data, vo, vx, vz), weight, ... |
| p3 | P3 | P1P2P3 | Node | - | - | resources/P3.obj: Coordinate conversion information in completed shape (Three-points data, vo, vx, vz), weight, ... |
| l1 | line1 | P1P2P3 | Edge | P1 | P2 | resources/line1.txt (Joining line data) |
| l2 | line2 | P1P2P3 | Edge | P2 | P3 | resources/line2.txt (Joining line data) |

line1
line2
P1
P2
P3
Edge
Edge
Node
Node
Node

Fig. 7

(a) (b) (c)

(d) (e)

Fig. 8

facility.csv

| ID | name | type | model_file_path | ability |
|---|---|---|---|---|
| f1 | Worker 1 (ironworker) | Worker | Resources/worker.obj | 1.5m/s (maximum walking speed) (, maximum load which can be brought up by hand, ...) |
| f2 | Worker 2 (welder) | Worker | Resources/worker.obj | 1.5m/s (maximum walking speed) (, maximum load which can be brought up by hand, ...) |
| f3 | Crane 1 | Crane | Resources/crane_v2.obj | 0.5m/s (maximum moving speed) (, rated load, rated speed (transverse/travelling/hoisting/slewing), span lifting height, ...) |
| f4 | Welding machine 1 | Welding machine | Resources/welding_machine.obj | (maximum moving speed, welding speed range (graph of A, V and speed), ... ) |
| f5 | Welding machine 2 | Welding machine | Resources/welding_machine.obj | (maximum moving speed, welding speed range (graph of A, V and speed), ... ) |
| f6 | Floor | Floor | Resources/Floor.obj | |
| f7 | Surface plate 1 | Surface plate | Resources/Surface_plate1.obj | |
| f8 | Surface plate 2 | Surface plate | Resources/Surface_plate2.obj | |
| f9 | Surface plate 3 | Surface plate | Resources/Surface_plate3.obj | |
| f10 | Surface plate 4 | Surface plate | Resources/Surface_plate4.obj | |

Fig. 9

Process model
- Definition of the intermediate part
- Dependency relation of assembling
- Definition of task itself
- Anteroposterior dependency relation
Assembling tree
Task (process) tree
process_assembly.csv
process_task.csv

Fig. 10

Start
S3-1
Read-in product, facility
S3-2
Diversion?
Yes
S3-6
Extract similar process data from past data
No
S3-3
Redefine
Define assembling relation of intermediate part as tree
S3-4
Redefine
Define appropriate task in each of stages of the assembling
S3-5
Redefine
Define anteroposterior relation of task as tree
S3-7
Is it within ability value range described in facility?
No
Yes
→ Output process model
S3-8
Allocate task to action subjects
→ Output schedule information
S3-9
Create factory layout information of facility
→ Output factory layout information
End

Fig. 11

1
Basic design information
10
Product model obtaining means
21
Equipment information
22
Worker information
20
Facility model obtaining means
30
Process model creating means
Assembling tree task tree
70
Past ship database
3
Factory layout information
2
Schedule information
4
Rule information
40
Building simulating means (time evolution system simulation)
•Interim result
42
Building time series information
60
Model changing instructing means expected target, constraint range
50
Information supplying means
Gantt Chart, work breakdown structure, operation procedure manual, man-hour, flow line

Fig. 12

P1
(Base)
P2
P4
P3
(Base)
P5
Intermediate
part: U1
Intermediate
part: U2
(Base)
Completed
part: SUB1

Fig. 13

process_assembly.csv

| ID | name | product1(base) ID | product2 ID | Coordinate conversion information of component part in intermediate part |
|---|---|---|---|---|
| a0 | P1P2 | P1 | P2 | Three-points information of P1 (**v'**o, **v'**x, **v'**z), (Three-points information of P2 (**v'**o, **v'**x, **v'**z)) |
| a1 | P1P2P3 | P3 | P1P2 | Three-points information of P3 (**v'**o, **v'**x, **v'**z), (Three-points information of P1P2 (**v'**o, **v'**x, **v'**z)) |

Assembling tree
Completed part: P1P2P3
Intermediate part: P1P2
P1 (Base)
P2
P3 (Base)

Fig. 14

START
[Carry 0]
Carrying P2
[Carry 1]
Carrying P1
[Carry 2]
Carrying P4
[Carry 3]
Carrying P5
[Carry 4]
Carrying P3
[Temporary welding 0]
Temporal welding
of line 1
[Temporary welding 1]
Temporal welding
of line 2
[Temporary welding 2]
Temporal welding
of line 5
[Regular welding 0]
Regular welding
of line 1
[Regular welding 1]
Regular welding
of line 2
[Regular welding 2]
Regular welding
of line 5
[Carry 5]
Carrying U1
[Carry 6]
Carrying U2
[Temporary welding 3]
Temporal welding
of line 3
[Temporary welding 4]
Temporal welding
of line 4
[Regular welding 3]
Regular welding
of line 3
[Regular welding 4]
Regular welding
of line 4
END

Fig. 15

START
Carry 0: move P1 to surface plate 2
Carry 1: move P2 to surface plate 2
Carry 2: move P3 to surface plate 3
Temporary welding 0: tack welding of P1 and P2
Regular welding 0: regular welding of P1 and P2
Carry 3: move P1P2 to surface plate 3
Define task
Reverse 0: Reversing P1P2
Temporary welding 1: tack welding of P1P2 and P3
Carry 4: move welding machine 1 to surface plate 4
Regular welding 1: regular welding of P1P2 and P3
Move 0: worker 1 moves
Carry 5: move welding machine 2 to surface plate 4
Move 1: worker 2 moves
END
Anteroposterior relation of task (dependence relation)

| After | Before |
| --- | --- |
| Temporary welding 0 | Carry0/Carry1 |
| Regular welding 0 | Temporary welding 0 |
| Carry 3 | Regular welding 0 |
| Reverse 0 | Carry2/Carry3 |
| Temporary welding 1 | Reverse 0 |
| Regular welding 1 | Temporary welding 1 |
| Carry 4 | Temporary welding 1 |
| Move 0 | Carry 4 |
| Carry 5 | Regular welding 1 |
| Move 1 | Carry 5 |

Fig. 16

Process_task.csv

| ID | name | task type | product ID | facility ID | conditions ID | task data |
|---|---|---|---|---|---|---|
| t1 | Carry 0 | Carry | P1 | Crane 1 | | Surface plate 2, (8, 0, 4), (0,0,0) (carry destination reference object, position, turn) |
| t2 | Carry 1 | Carry | P2 | Crane 1 | | Surface plate 2, (4, 0, 4), (0,0,0) (carry destination reference object, position, turn) |
| t3 | Carry 2 | Carry | P3 | Crane 1 | | Surface plate 3, (2, 0, 4), (0,0,0) (carry destination reference object, position, turn) |
| t4 | Carry 3 | Carry | P1P2 | Crane 1 | Regular welding 0 | Surface plate 3, (8, 0, 4), (0,0,0) (carry destination reference object, position, turn) |
| t5 | Carry 4 | Carry | - | Welding machine 1 | Temporary welding 1 | Surface plate 4, (8, 0, 4), (0,0,0) (carry destination reference object, position, turn) |
| t6 | Carry 5 | Carry | - | Welding machine 2 | Regular welding 1 | Surface plate 4, (8, 0, 4), (0,0,0) (carry destination reference object, position, turn) |
| t7 | Temporary welding 0 | Temporary welding | P1P2 | Welding machine 1: crane 1 | Carry 0: Carry 1 | 0.2m/s (welding speed), Resources/welding_line/fft0/(welding information) |
| t8 | Temporary welding 1 | Temporary welding | P1P2P3 | Welding machine 1: crane 1 | Reverse 0 | 0.2m/s (welding speed), Resources/welding_line/fft1/(welding information) |
| t9 | Regular welding 0 | Regular welding | P1P2 | Welding machine 2 | Temporary welding 0 | 0.02m/s (welding speed), Resources/welding_line/hwt0/(welding information) |
| t10 | Regular welding 1 | Regular welding | P1P2P3 | Welding machine 2 | Temporary welding 1 | 0.02m/s (welding speed), Resources/welding_line/hwt1/(welding information) |
| t11 | Reverse 0 | Reverse | P1P2 | Crane 1 | Carry 2: Carry 3 | Coordinate conversion information (reference point three-point data) |
| t12 | Move 0 | Move | - | Worker 1 | Carry 4 | Surface plate 4, (2, 0 , 1), (0,0,0) (movement reference destination, position, turn) |
| t13 | Move 1 | Move | - | Worker 2 | | Surface plate 4, (2, 0 , 2), (0,0,0) (movement reference destination, position, turn) |

Fig. 17

| Carry 0: move P1 to surface plate 2 |
| --- |
| Carry 1: move P2 to surface plate 2 |
| Temporary welding 0: tack welding of P1 and P2 |
| Carry 2: move P3 to surface plate 3 |
| Carry 3: move P1P2 to surface plate 3 |
| Temporary welding 1: tack welding of P1P2 and P3 |
| Reverse 0: Reversing P1P2 |
| Carry 4: move welding machine 1 |
| Move 0: worker 1 moves |

(a)

| Regular welding 0: regular welding of P1 and P2 |
| --- |
| Regular welding 1: regular welding of P1P2 and P3 |
| Carry 5: move welding machine 2 |
| Move 1: worker 2 moves |

(b)

schedule.csv

| name | task_schedule ID | | | | | | | | |
| --- | --- | --- | --- | --- | --- | --- | --- | --- | --- |
| Worker 1 | Carry 0 | Carry 1 | Temporary welding 0 | Carry 2 | Carry 3 | Reverse 0 | Temporary welding 1 | Carry 4 | Move 0 |
| Worker 2 | Regular welding 0 | Regular welding 1 | Carry 5 | Move 1 | | | | | |

(c)

Fig. 18

Surface plate 3
Surface plate 2
Welding machine 2
Welding machine 1
Crane 1
Worker 2
Surface plate 1
Worker 1
Floor 1
P1~P5
Surface plate 4

Fig. 19

layout.csv

| ID | Reference object ID of position and attitude | Position X | Position Y | Position Z | Turn X | Turn Y | Turn Z | Scale X | Scale Y | Scale Z | Others |
|---|---|---|---|---|---|---|---|---|---|---|---|
| Floor | - | 0 | 0 | 0 | 0 | 0 | 0 | 1 | 1 | 1 | |
| Surface plate 1 | Floor | 5 | 0.2 | 5 | 0 | 0 | 0 | 1 | 1 | 1 | |
| Surface plate 2 | Floor | 5 | 0.2 | 15 | 0 | 0 | 0 | 1 | 1 | 1 | |
| Surface plate 3 | Floor | 5 | 0.2 | 25 | 0 | 0 | 0 | 1 | 1 | 1 | |
| Surface plate 4 | Floor | 20 | 0.1 | 5 | 0 | 0 | 0 | 1 | 1 | 1 | |
| Crane 1 | Floor | 5 | 6 | 12 | 0 | 0 | 0 | 1 | 1 | 1 | Distance from, end of crane body: 0, crane girder lengthy: 10 |
| Worker 1 | Surface plate 4 | 2 | 0 | 1 | 0 | -90 | 0 | 1 | 1 | 1 | |
| Worker 2 | Surface plate 4 | 2 | 0 | 2 | 0 | -90 | 0 | 1 | 1 | 1 | |
| Welding machine 1 | Surface plate 4 | 2 | 0 | 3 | 0 | 0 | 0 | 1 | 1 | 1 | |
| Welding machine 2 | Surface plate 4 | 2 | 0 | 4 | 0 | 0 | 0 | 1 | 1 | 1 | |
| P1 | Surface plate 4 | 8 | 0 | 3 | 0 | 0 | 0 | 1 | 1 | 1 | |
| P2 | Surface plate 4 | 6 | 0 | 3 | 0 | 0 | 0 | 1 | 1 | 1 | |
| P3 | Surface plate 4 | 4 | 0 | 3 | 0 | 0 | 0 | 1 | 1 | 1 | |

Fig. 20

Start
S4-1
Read-in product, facility, process, schedule and rule
S4-2
Change allocated task in accordance with situation
Allocated initial custom task is executed for all action subjects, and add one second
S4-3
Is task completed?
No
Yes
S4-4
Are all allocated tasks completed?
No
Yes
End

Fig. 21

(a)

(b)

Fig. 22

```
global_time = 0
While stop==false:
  For worker in workers:
      if Tasks[worker].Length>0
            isEnd = Tasks[worker][0].Run
            if isEnd=true:
                Tasks[worker][0].Remove
  global_time ++
  if all Tasks.Length==0: stop=true
```

Fig. 23

Coordinate value
Subject name

Longitudinal member
Manhole

Fig. 24

Cable
Welding machine
Subject name
Hose
Welding line

Fig. 25

Crane
Crane

Fig. 26

| Carry At | AtPick | (common): task name, task type, function name, objective, utilized facility, antecedent task, subjective name, required facility type and number of pieces | (Inherent): - |
|---|---|---|---|

Utilized facility
Objective
- Hook is lowered
- Time out for the slinging time
- Hook is hoisted
Subject name

Fig. 27

| Carry At | AtPlace | (common): task name, task type, function name, objective, utilized facility, antecedent task, subjective name, required facility type and number of pieces | (Inherent): (Inherent): reference object, coordinate value (x, y, z), and Euler angle (θ, ϕ, ψ) of carry destination |
|---|---|---|---|

Utilized facility
Objective
Subject name
coordinate value, Euler angle
- Hook is lowered
- Time out for detaching operation
- Hook is hoisted

Fig. 28

Regular welding 1
Wait_start
Wait_hold
move
move
weld
...
Release
Set_end
Check starting condition
Secure tool, etc.
move object
move based on welding line information
release secured thing
Store this task as a completed schedule

Fig. 29

130
130
130
130

Fig. 30

SUB_F_P1.obj
SUB_F_P10.obj
SUB_F_P2.obj

Fig. 31

weld_0.txt
File (F) Edit (E) Format (O) View (V) Help (
-0.5 0.01 0.9
-0.5 0.01 0.15
-0.3 0.21 0.9
-0.3 0.21 0.15

Fig. 32

heat_0.txt
File(F) Edit(E) Format(O) View(V) Help
-0.505 0 0.15 -0.505 -0.19 0.15
-0.505 0 0.9 -0.505 -0.19 0.9
△

Fig. 33

| | A | B | C | D | E | F | G | H |
|---|---|---|---|---|---|---|---|---|
| 1 | # Name | Group name | Type | node1 | node2 | Path | Attitude Information | Weight |
| 2 | SUB_F_P1 | SUB_F | node | - | - | Product/AModel/SUB_F/SUB_F_P1 | 0 0 5.30953745292086 0 0 4.30953745292086 1 0 5.30953745292086 | 806.2919766 |
| 3 | SUB_F_P2 | SUB_F | node | - | - | Product/AModel/SUB_F/SUB_F_P2 | 0.510000000000001 0.0450000000000005 0.935 0.510000000000007 -0.662 | 8.32885 |
| 4 | SUB_F_P3 | SUB_F | node | - | - | Product/AModel/SUB_F/SUB_F_P3 | 1.01 0.0450000000000005 0.935 1.01000000000001 -0.662106781186549 0. | 8.32885 |
| 5 | SUB_F_P4 | SUB_F | node | - | - | Product/AModel/SUB_F/SUB_F_P4 | 1.51 0.0450000000000007 0.985 1.51000000000001 -0.662106781186549 0. | 8.32885 |
| 6 | SUB_F_P5 | SUB_F | node | - | - | Product/AModel/SUB_F/SUB_F_P5 | 2.01 0.0450000000000007 1.035 2.01000000000001 -0.662106781186549 0. | 8.32885 |
| 7 | SUB_F_P6 | SUB_F | node | - | - | Product/AModel/SUB_F/SUB_F_P6 | 0.509999999999999 0.455 4.63453745292087 0.510000000000004 -0.25210 | 8.32885 |
| 8 | SUB_F_P7 | SUB_F | node | - | - | Product/AModel/SUB_F/SUB_F_P7 | 1.01 0.455 4.63453745292087 1.01 -0.252106781186549 5.34164423410741 | 8.32885 |
| 9 | SUB_F_P8 | SUB_F | node | - | - | Product/AModel/SUB_F/SUB_F_P8 | 1.51 0.455 4.58453745292087 1.51 -0.252106781186548 5.29164423410741 | 8.32885 |
| 10 | SUB_F_P9 | SUB_F | node | - | - | Product/AModel/SUB_F/SUB_F_P9 | 2.01 0.455 4.53453745292087 2.01 -0.252106781186549 5.24164423410741 | 8.32885 |
| 11 | SUB_F_P10 | SUB_F | node | - | - | Product/AModel/SUB_F/SUB_F_P10 | -0.010201132488121 -0.15 1.00003468810243 0.989793086144761 -0.15 0.9 | 173.0561327 |
| 12 | SUB_F_P11 | SUB_F | node | - | - | Product/AModel/SUB_F/SUB_F_P11 | 0.2 0.1 3.99154195697992 0.2 0.1 2.99154195697992 0.2 -0.9 3.99154195697 | 46.81926735 |
| 13 | SUB_F_Line1 | SUB_F | edge | SUB_F_P1 | SUB_F_P2 | Product/AModel/SUB_F/WeldingLine/Line1/ Product/AModel/SUB_F/WeldingLine/Line1/ | | |
| 14 | SUB_F_Line2 | SUB_F | edge | SUB_F_P1 | SUB_F_P2 | Product/AModel/SUB_F/WeldingLine/Line2/ Product/AModel/SUB_F/WeldingLine/Line2/ | | |
| 15 | SUB_F_Line3 | SUB_F | edge | SUB_F_P1 | SUB_F_P3 | Product/AModel/SUB_F/WeldingLine/Line3/ Product/AModel/SUB_F/WeldingLine/Line3/ | | |
| 16 | SUB_F_Line4 | SUB_F | edge | SUB_F_P1 | SUB_F_P3 | Product/AModel/SUB_F/WeldingLine/Line4/ Product/AModel/SUB_F/WeldingLine/Line4/ | | |
| 17 | SUB_F_Line5 | SUB_F | edge | SUB_F_P1 | SUB_F_P4 | Product/AModel/SUB_F/WeldingLine/Line5/ Product/AModel/SUB_F/WeldingLine/Line5/ | | |
| 18 | SUB_F_Line6 | SUB_F | edge | SUB_F_P1 | SUB_F_P4 | Product/AModel/SUB_F/WeldingLine/Line6/ Product/AModel/SUB_F/WeldingLine/Line6/ | | |
| 19 | SUB_F_Line7 | SUB_F | edge | SUB_F_P1 | SUB_F_P5 | Product/AModel/SUB_F/WeldingLine/Line7/ Product/AModel/SUB_F/WeldingLine/Line7/ | | |
| 20 | SUB_F_Line8 | SUB_F | edge | SUB_F_P1 | SUB_F_P5 | Product/AModel/SUB_F/WeldingLine/Line8/ Product/AModel/SUB_F/WeldingLine/Line8/ | | |
| 21 | SUB_F_Line9 | SUB_F | edge | SUB_F_P1 | SUB_F_P6 | Product/AModel/SUB_F/WeldingLine/Line9/ Product/AModel/SUB_F/WeldingLine/Line9/ | | |

Fig. 34

| | A | B | C | D | E | F |
|---|---|---|---|---|---|---|
| 1 | # LineName | LineType | ParentProductName | Path | | |
| 2 | SUB_F_DR_Line1 | DistortionRemoval | SUB_F_P1 | Product/AModel/SUB_F/HeatingLine/Line1/ | | |
| 3 | SUB_F_DR_Line2 | DistortionRemoval | SUB_F_P1 | Product/AModel/SUB_F/HeatingLine/Line2/ | | |
| 4 | SUB_F_DR_Line3 | DistortionRemoval | SUB_F_P1 | Product/AModel/SUB_F/HeatingLine/Line3/ | | |
| 5 | SUB_F_DR_Line4 | DistortionRemoval | SUB_F_P1 | Product/AModel/SUB_F/HeatingLine/Line4/ | | |
| 6 | SUB_F_DR_Line5 | DistortionRemoval | SUB_F_P1 | Product/AModel/SUB_F/HeatingLine/Line5/ | | |
| 7 | SUB_F_DR_Line6 | DistortionRemoval | SUB_F_P1 | Product/AModel/SUB_F/HeatingLine/Line6/ | | |
| 8 | SUB_F_DR_Line7 | DistortionRemoval | SUB_F_P1 | Product/AModel/SUB_F/HeatingLine/Line7/ | | |
| 9 | SUB_F_DR_Line8 | DistortionRemoval | SUB_F_P1 | Product/AModel/SUB_F/HeatingLine/Line8/ | | |
| 10 | | | | | | |

Fig. 35

| # Name | ComponentName | isBaseProduct | ProductPose |
|---|---|---|---|
| SUB_FU1 | SUB_F_P1 | base | 5.31 0.21 0 4.31 0.21 0 5.31 0.21 1 |
| SUB_FU1 | SUB_F_P10 | - | - |
| SUB_FU2 | SUB_FU1 | base | 0 0 0 1 0 0 0 0 1 |
| SUB_FU2 | SUB_F_P11 | - | - |
| SUB_F | SUB_FU2 | base | 5.31 0.300 0 4.313 0.3 0 5.31 0.3 1 |
| SUB_F | SUB_F_P2 | - | - |
| SUB_F | SUB_F_P3 | - | - |
| SUB_F | SUB_F_P4 | - | - |
| SUB_F | SUB_F_P5 | - | - |
| SUB_F | SUB_F_P6 | - | - |
| SUB_F | SUB_F_P7 | - | - |
| SUB_F | SUB_F_P8 | - | - |
| SUB_F | SUB_F_P9 | - | - |

SUB_F_P1
SUB_F_P10
SUB_FU1
SUB_F_P11
SUB_FU2
SUB_F2~9
SUB_F

Fig. 36

| | A | B | C | D | E | F | G | H |
|---|---|---|---|---|---|---|---|---|
| 1 | # TaskName | TaskType | FunctionN | TaskObject | TaskFacility | TaskConditions | TaskParameter | RequiredFacilityList |
| 2 | At1_SUB_F_Pick_P1 | At1 | AtPick | SUB_F_P1 | null | - | - | Crane 1 |
| 3 | At1_SUB_F_Pick_P2 | At1 | AtPick | SUB_F_P2 | null | Wt_SUB_F_Line17 | - | - |
| 4 | At1_SUB_F_Pick_P3 | At1 | AtPick | SUB_F_P3 | null | Wt_SUB_F_Line17 | - | - |
| 5 | At1_SUB_F_Pick_P4 | At1 | AtPick | SUB_F_P4 | null | Wt_SUB_F_Line17 | - | - |
| 6 | At1_SUB_F_Pick_P5 | At1 | AtPick | SUB_F_P5 | null | Wt_SUB_F_Line17 | - | - |
| 7 | At1_SUB_F_Pick_P6 | At1 | AtPick | SUB_F_P6 | null | Wt_SUB_F_Line17 | - | - |
| 8 | At1_SUB_F_Pick_P7 | At1 | AtPick | SUB_F_P7 | null | Wt_SUB_F_Line17 | - | - |
| 9 | At1_SUB_F_Pick_P8 | At1 | AtPick | SUB_F_P8 | null | Wt_SUB_F_Line17 | - | - |
| 10 | At1_SUB_F_Pick_P9 | At1 | AtPick | SUB_F_P9 | null | Wt_SUB_F_Line17 | - | - |
| 11 | At1_SUB_F_Pick_P10 | At1 | AtPick | SUB_F_P10 | null | - | - | Crane 1 |
| 12 | At1_SUB_F_Pick_P11 | At1 | AtPick | SUB_F_P11 | null | Ft_SUB_F_Line18 | - | Crane 1 |
| 13 | At1_SUB_F_Place_P1 | At1 | AtPlace | SUB_F_P1 | null | At1_SUB_F_Pick_P1 | SurfacePlate2 :null :null | Crane 1 |
| 14 | At1_SUB_F_Place_P2 | At1 | AtPlace | SUB_F_P2 | null | At1_SUB_F_Pick_P2 | SurfacePlate2 :null :null | - |
| 15 | At1_SUB_F_Place_P3 | At1 | AtPlace | SUB_F_P3 | null | At1_SUB_F_Pick_P3 | SurfacePlate2 :null :null | - |

Fig. 37

Start
S6-1
Read-in product, facility, process, schedule, rule, and time series data
S6-2
Create Gantt Chart Calculate critical path
Display flow line
Replay
...
End

Fig. 38

Factory A
CAD system
Factory B
CAD system
improvement information
Factory C
CAD system
Company D
80
22
Worker information
21
Equipment information
1
Basic design information
20
Facility model obtaining means
10
product model obtaining means
30
Process model creating means
assembling tree task tree
2
Schedule information
3
Factory layout information
40
Building simulating means
(time evolution system simulation)
42
Building time series information
50
Information supplying means
70
Past ship DB
4
Rule information

Fig. 39

Factory B
CAD system
improvement information
Factory C
CAD system
Company D
80
Factory A
CAD system
90
Common database
Basic design information DB Equipment information DB Worker information DB Rule information DB Time series information DB
Past ship DB
70
20
Facility model obtaining means
10
Product model obtaining means
30
Process model creating means
assembling tree task tree
2
Schedule information
3
Factory layout information
40
Building simulating means
(time evolution system simulation)
42
Building time series information
50
Information supplying means

Fig. 40

Factory A
CAD system
Factory B
CAD system
Factory C
CAD system
Company D
80
90
Common database
Basic design information DB Equipment information DB Worker information DB Rule information DB Time series information DB
Past ship DB
70
10
Product model obtaining means
20
Facility model obtaining means
30
Process model creating means
assembling tree task tree
3
Factory layout information
2
Schedule information
40
Building simulating means (time evolution system simulation)
42
Building time series information
50
Information supplying means
100
cost-calculating means
110
part-procuring planning means
120
production planning system-cooperating means
140
production planning system

Fig. 41

SUB1
U1
U2
P5
P4
P3
P2
P1
Welding machine 2
Welding machine 1
Crane 1
Worker 2
Worker 1
0
200
400
600
800
1000
1200
1400
1600

Fig. 42

SUB1
U1
U2
P5
P4
P3
P2
P1
Welding machine 4
Welding machine 3
Welding machine 2
Welding machine 1
Crane 1
Worker 4
Worker 3
Worker 2
Worker 1
0
200
400
600
800
1000
1200
1400
1600

Fig. 43

**INTERNATIONAL SEARCH REPORT**

International application No.
**PCT/JP2021/034408**

**A. CLASSIFICATION OF SUBJECT MATTER**

***G05B 19/418***(2006.01)i; ***G06Q 50/04***(2012.01)i; ***B63B 73/00***(2020.01)i; ***G06F 30/15***(2020.01)i; ***G06F 30/20***(2020.01)i
FI: B63B73/00; G06Q50/04; G05B19/418 Z; G06F30/15; G06F30/20

According to International Patent Classification (IPC) or to both national classification and IPC

**B. FIELDS SEARCHED**

Minimum documentation searched (classification system followed by classification symbols)

G05B19/418; G06Q50/04; B63B73/00; G06F30/15; G06F30/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | 平方勝，松尾宏平，谷口智之，竹澤正仁, 次世代造船システムの構想, 令和２年(第２０回)海上技術安全研究所研究発表会, 海上技術安全研究所, July 2020, pp.1-18 pp. 5-15, (HIRAKATA, Masaru. MATSUO, Kohei. TANIGUCHI, Tomoyuki. TAKEZAWA, Masahito. Concept for Future Shipbuilding system. National Maritime Research Institute. ), non-official translation (The 20th Research Presentation Meeting of National Maritime Research Institute 2020) | 1-8, 10-18 |
| Y | 武市祥司，青山和浩，小林真，牧原一昭, ペトリネットを利用した工場シミュレータの構築 —第３尭：定盤モデルを導入した工場シミュレータ—, 日本造船学会論文集, December 2001, no. 190, pp. 449-458, DOI: 10.2534/jjasnaoe1968.2001.190_449, ISSN 1884-2070(online), 0514-8499(print) pp. 450-457, (TAKECHI, Shoji. AOYAMA, Kazuhiro. KOBAYASHI, Makoto. MAKIHARA, Kazuaki. Development of Shipyard Simulation System based on Petri Nets : 3rd Report : Factory Simulator introduced the concept of the Job-Shop Floor. Journal of the Society of Naval Architects of Japan.) | 1-8, 10-18 |
| Y | JP 5401270 B2 (HITACHI LTD) 29 January 2014 (2014-01-29) paragraphs [0094]-[0099], fig. 10-13, 20 | 7-8, 10-18 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **12 November 2021** | **30 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/034408**

**C. DOCUMENTS CONSIDERED TO BE RELEVANT**

| Category* | Citation of document, with indication, where appropriate, of the relevant passages | Relevant to claim No. |
|---|---|---|
| A | CN 110705882 A (JIANGSU UNIVERSITY OF SCIENCE AND TECHNOLOGY) 17 January 2020 (2020-01-17)<br>entire text, all drawings | 1-18 |
| A | LEE, Yong-Gil. JU, Su-Heon. WOO, Jong-Hun. Simulation-based planning system for shipbuilding. International Journal of Computer Integrated Manufacturing., 16 June 2020, vol. 33, no. 6, pp. 626-641, DOI: 10.1080/0951192X.2020.1775304<br>entire text, entire chart | 1-18 |
| A | 満行泰河，稗方和夫，松原洸也，大和裕幸，MOSER, Bryan, 船舶建造プロセスシミュレーションを用いた生産設備の導入に関する研究, 日本船舶海洋工学会論文集, December 2016, no. 24, pp. 291-298, DOI: 10.2534/jjasnaoe.23.291, ISSN 1881-1760(online),1880-3717(print)<br>entire text, entire chart, (MITSUYUKI, Taiga. HIEKATA, Kazuo. MATSUBARA, Hiroya. YAMATO, Hiroyuki. Study on Installation of Production Facilities Using Shipbuilding Process Simulation. Journal of the Japan Society of Naval Architects and Ocean Engineers.) | 1-18 |
| A | LEE, Dong-Kun. SHIN, Jong-Gye. KIM, Young-Min. JEONG, Yong-Kuk. Simulation-Baced Work Plan Verification in Shipyards. Journal of Ship Production and Design., May 2014, vol. 30, issue 2, pp. 49-57, DOI: 10.5957/JSPD.30.2.130032, ISSN 2158-2874(online), 2158-2866(print)<br>entire text, entire chart | 1-18 |

Form PCT/ISA/210 (second sheet) (January 2015)

**INTERNATIONAL SEARCH REPORT**
**Information on patent family members**

International application No.
**PCT/JP2021/034408**

| Patent document cited in search report | Publication date (day/month/year) | Patent family member(s) | Publication date (day/month/year) |
|---|---|---|---|
| JP 5401270 B2 | 29 January 2014 | WO 2011/058894 A1 | |
| CN 110705882 A | 17 January 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3211204 U
- JP 2013117959 A
- JP 2007183817 A
- JP 2003162313 A


### Non-patent literature cited in the description


- A Fundamental Study on Manufacturing Planning and Control System for Shipbuilding CIM. **TAKEO KOYAMA.** Journal of the Society of Naval Architects of Japan. The Society of Naval Architects of Japan, November 1989, vol. 166, 415-423
- Study on Installation of Production Facilities Using Shipbuilding Process Simulation. **MITSUYUKI TAIGA.** Journal of the Japan Society of Naval Architects and Ocean Engineers. The Japan Society of Naval Architects and Ocean Engineers, December 2016, vol. 24, 291-298